(19) Europäisches Patentamt
European Patent Office
Office européen des brevets

(11) **EP 3 730 286 B1**

(12) **EUROPÄISCHE PATENTSCHRIFT**

(45) Veröffentlichungstag und Bekanntmachung des Hinweises auf die Patenterteilung:
**28.01.2026   Patentblatt 2026/05**

(21) Anmeldenummer: **20169956.8**

(22) Anmeldetag: **16.04.2020**

(51) Internationale Patentklassifikation (IPC):
*B32B 15/01* (2006.01)    *C21D 1/26* (2006.01)
*C21D 6/00* (2006.01)    *C21D 8/06* (2006.01)
*C21D 8/12* (2026.01)    *C21D 9/46* (2006.01)
*C21D 9/52* (2006.01)    *C22C 38/00* (2006.01)
*C22C 38/02* (2006.01)    *C22C 38/10* (2006.01)
*C22C 38/12* (2006.01)    *C22C 38/24* (2006.01)
*C22C 38/30* (2006.01)    *C22C 38/34* (2006.01)
*H01F 1/01* (2006.01)    *H01F 1/14* (2006.01)
*H01F 1/147* (2006.01)    *H02K 1/00* (2006.01)
*C21D 1/84* (2006.01)    *B23K 20/02* (2006.01)

(52) Gemeinsame Patentklassifikation (CPC):
**C22C 38/10; B32B 15/011; C21D 1/26; C21D 1/84;
C21D 6/002; C21D 6/007; C21D 6/008;
C21D 8/065; C21D 8/1222; C21D 8/1233;
C21D 8/1244; C21D 9/46; C21D 9/52;
C22C 38/004; C22C 38/02;**    (Forts.)

(54) **BLECHPAKET UND VERFAHREN ZUM HERSTELLEN EINER HOCHPERMEABLEN WEICHMAGNETISCHEN LEGIERUNG**

LAMINATED CORE AND METHOD FOR PRODUCING HIGH PERMEABILITY SOFT MAGNETIC ALLOY

PAQUET DE TÔLES ET PROCÉDÉ DE FABRICATION D'UN ALLIAGE MAGNÉTIQUE SOUPLE À HAUTE PERMÉABILITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **26.04.2019   DE 102019110872**

(43) Veröffentlichungstag der Anmeldung:
**28.10.2020   Patentblatt 2020/44**

(73) Patentinhaber: **Vacuumschmelze GmbH & Co. KG
63450 Hanau (DE)**

(72) Erfinder:
• **FOHR, Jan Frederik
63322 Rödermark (DE)**
• **TENBRINK, Johannes
63776 Mömbris (DE)**
• **VOLBERS, Niklas
63486 Bruchköbel (DE)**

(74) Vertreter: **JENSEN & SON
366-368 Old Street
London EC1V 9LT (GB)**

(56) Entgegenhaltungen:
**EP-A1- 3 093 858    WO-A1-2013/125790**

• **SOURMAIL ET AL: "Near equiatomic FeCo alloys: Constitution, mechanical and magnetic properties", PROGRESS IN MATERIALS SCIENCE, PERGAMON PRESS, GB, vol. 50, no. 7, 1 September 2005 (2005-09-01), pages 816 - 880, XP027691213, ISSN: 0079-6425, [retrieved on 20050901]**

(52) Gemeinsame Patentklassifikation (CPC): (Forts.)
**C22C 38/12; C22C 38/24; C22C 38/30;**
**C22C 38/34; H01F 41/0233; H02K 1/00**

**Beschreibung**

Die vorliegende Erfindung betrifft ein Verfahren zum Herstellen einer weichmagnetischen Vorprodukts, aus einer hochpermeablen weichmagnetischen Legierung.

Nicht-kornorientiertes Elektroblech mit ca. 3 Gew.-% Silizium (SiFe) ist das am weitesten verbreitete kristalline weichmagnetische Material, das in Blechpaketen von elektrischen Maschinen Anwendung findet. Im Zuge der voranschreitenden Elektromobilität werden effizientere Materialien benötigt, die gegenüber dem SiFe eine bessere Performance aufweisen. Dies bedeutet neben einem ausreichend hohen elektrischen Widerstand, dass vor allem ein höheres Induktionsniveau wünschenswert ist, um hohe Drehmomente und/oder ein kleines Bauvolumen auszubilden.

Für den Einsatz in manchen Technologien wie der Automobilindustrie und der Elektromobilität sind noch effizientere Materialien wünschenswert, um die Leistungsdichte weiter zu erhöhen. Weichmagnetische Kobalt-Eisen-Legierungen (CoFe) werden aufgrund ihrer überragend hohen Sättigungsinduktion auch in elektrischen Maschinen verwendet. Kommerziell verfügbare CoFe-Legierungen weisen typischerweise eine Zusammensetzung von 49 Gew.-% Fe, 49 Gew.-% Co und 2 % V auf. Bei einer solchen Zusammensetzung wird eine Sättigungsinduktion von etwa 2,35 T erreicht bei gleichzeitig hohem elektrischem Widerstand von 0,4 $\mu\Omega$m. Es ist jedoch wünschenswert, die Material- und Herstellungskosten für CoFe-Legierungen zu reduzieren, die beispielsweise auf Grund des hohen Co-Gehaltes, der zusätzlichen Fertigungsschritte sowie des Schrottanteils entstehen.

Die WO 2013/125790 A1 offenbart ein Verfahren zum Herstellen einer Platte aus einer CoFe-Legierung mit 10 bis 35 Gew.-% Co, wobei {100} Ebenen der Körner parallel zu der Oberfläche der Platte sind.

Die zu lösende Aufgabe besteht somit darin, ein Vorprodukt aus einer FeCo-Legierung bereitzustellen, das niedrigere Materialkosten aufweist und das gleichzeitig gut verarbeitbar ist, um die Herstellkosten der Legierung bis hin zum Blechpaket zu reduzieren, und gleichzeitig eine hohe Leistungsdichte zu ermöglichen.

Gelöst wird dies durch den Gegenstand der unabhängigen Ansprüche. Weitere vorteilhafte Weiterbildungen sind Gegenstand der jeweiligen abhängigen Ansprüche.

Erfindungsgemäß wird ein Verfahren zum Herstellen eines Vorprodukts aus einer weichmagnetischen Legierung, insbesondere einer hochpermeablen weichmagnetische FeCo-Legierung bereitgestellt. Zunächst wird ein Vorprodukt bereitgestellt, das eine Zusammensetzung, die aus

| | | |
|---|---|---|
| 5 Gew.-% | $\leq$ Co | $\leq$ 25 Gew.-% |
| 0,3 Gew.-% | $\leq$ V | $\leq$ 5,0 Gew.-% |
| 0 Gew.-% | $\leq$ Cr | $\leq$ 3,0 Gew.-% |
| 0 Gew.-% | $\leq$ Si | $\leq$ 3,0 Gew.-% |
| 0 Gew.-% | $\leq$ Mn | $\leq$ 3,0 Gew.-% |
| 0 Gew.-% | $\leq$ Al | $\leq$ 3,0 Gew.-% |
| 0 Gew.-% | $\leq$ Ta | $\leq$ 0,5 Gew.-% |
| 0 Gew.-% | $\leq$ Ni | $\leq$ 0,5 Gew.-% |
| 0 Gew.-% | $\leq$ Mo | $\leq$ 0,5 Gew.-% |
| 0 Gew.-% | $\leq$ Cu | $\leq$ 0,2 Gew.-% |
| 0 Gew.-% | $\leq$ Nb | $\leq$ 0,25 Gew.-% |
| 0 Gew.-% | $\leq$ Ti | $\leq$ 0,05 Gew.-% |
| 0 Gew.-% | $\leq$ Ce | $\leq$ 0,05 Gew.-% |
| 0 Gew.-% | $\leq$ Ca | $\leq$ 0,05 Gew.-% |
| 0 Gew.-% | $\leq$ Mg | $\leq$ 0,05 Gew.-% |
| 0 Gew.-% | $\leq$ C | $\leq$ 0,02 Gew.-% |
| 0 Gew.-% | $\leq$ Zr | $\leq$ 0,1 Gew.-% |
| 0 Gew.-% | $\leq$ O | $\leq$ 0,025 Gew.-% |
| 0 Gew.-% | $\leq$ S | $\leq$ 0,015 Gew.-% |

Rest Eisen, wobei Cr+Si+Al+Mn $\leq$ 3,0 Gew.-%, und bis zu 0,2 Gew.-% an anderen schmelzbedingten Verunreinigungen besteht. Andere Verunreinigungen sind zum Beispiel B, P, N, W, Hf, Y, Re, Sc, Be, andere Lanthanoide außer Ce.

Das Vorprodukt weist einen Phasenübergang von einem BCC-Phasengebiet, in ein BCC/FCC Mischgebiet zu einem FCC Phasengebiet auf, wobei bei aufsteigender Temperatur der Phasenübergang zwischen dem BCC Phasengebiet und dem BCC/FCC Mischgebiet bei einer ersten Übergangstemperatur $T_{Ü1}$ und bei weiter ansteigender Temperatur der Übergang zwischen dem BCC/FCC Mischgebiet und dem FCC Phasengebiet bei einer zweiten Übergangstemperatur $T_{Ü2}$ stattfindet, wobei $T_{Ü2} > T_{Ü1}$ und die Differenz $T_{Ü2} - T_{Ü1}$ geringer als 45K ist, vorzugsweise geringer als 25K.

Das Vorprodukt wird folgender Wärmebehandlung unterzogen, wobei vor dem Start der Wärmebehandlung das Vorprodukt eine Kaltwalztextur oder eine Fasertextur aufweist:

Aufheizen des Vorprodukts zu einer Temperatur $T_1$ und danach
Wärmebehandeln des Vorprodukts bei der Temperatur $T_1$ für eine Zeitdauer $t_1$ und danach Abkühlung von $T_1$ bis Raumtemperatur,

oder

das Vorprodukt wird folgender Wärmebehandlung unterzogen:

Aufheizen des Vorprodukts zu einer Temperatur $T_1$ und danach
Wärmebehandeln des Vorprodukts bei der Temperatur $T_1$ für eine Zeitdauer $t_1$ und danach
Abkühlen des Vorprodukts auf eine Temperatur $T_2$, und danach
Wärmebehandeln des Vorprodukts bei der Temperatur $T_2$ für eine Zeitdauer $t_2$, und danach
Abkühlen des Vorprodukts von $T_2$ auf Raumtemperatur,
wobei $T_1 > T_2$ ist, $T_1$ oberhalb $T_{Ü2}$ und $T_2$ unterhalb $T_{Ü1}$ liegt, wobei $920°C \leq T_1 < T_m$, $700°C \leq T_2 \leq 1050°C$, $T_m$ die Solidustemperatur ist, 15 Minuten $\leq t_1 \leq$ 20 Stunden und 30 Minuten $\leq t_2 \leq$ 20 Stunden ist.

Für beiden Verfahren beträgt die Aufheizrate über zumindest den Temperaturbereich von $T_{Ü1}$ auf $T_{Ü2}$ 1 K/h bis 100 K/h, vorzugsweise 10K/h bis 50 K/h und die Abkühlrate über zumindest den Temperaturbereich von $T_{Ü2}$ auf $T_{Ü1}$ 1K/h bis 100 K/h, vorzugsweise 10K/h bis 50 K/h.

Das Vorprodukt weist die Gestalt mehrerer gestapelter Bleche oder eines oder mehrerer Blechpakete auf und wird mit einem zusätzlichen Gewicht beschwert und das

Vorprodukt mit dem Gewicht der Wärmebehandlung unterzogen. Das Gewicht der Beschwerung kann mindestens 20%, bevorzugt mindestens 50% des Gewichts des Vorprodukts betragen.

Das Vorprodukt wird herkömmlich unter einer wasserstoffhaltigen Atmosphäre oder unter einem Inertgas wärmebehandelt, bevorzugt unter einer trockenen wasserstoffhaltigen Atmosphäre. Bei einer wasserstoffhaltigen Atmosphäre kann die Atmosphäre neben Wasserstoff auch ein Inertgas, beispielsweise Argon, aufweisen.

Erfindungsgemäß wird somit das Vorprodukt langsam durch die Übergänge zwischen dem BCC Phasengebiet und dem BCC/FCC Mischgebiet und zwischen dem BCC/FCC Mischgebiet und dem FCC Phasengebiet aufgeheizt und abgekühlt. Es wurde festgestellt, dass die Aufheizrate einen Einfluss auf die Form des Vorprodukts ausübt. Insbesondere werden die Planarität von Vorprodukten in Form von Blechen, auch gestapelten Blechen nach der Wärmebehandlung gewährleistet, wenn die Aufheizrate 1 K/h bis 100 K/h, vorzugsweise 4 K/h bis 100 K/h, vorzugsweise 10K/h bis 50 K/h beträgt, insbesondere zumindest über den Temperaturbereich von $T_{Ü1}$ auf $T_{Ü2}$. Gleiches gilt für die Abkühlrate zwischen $T_{Ü2}$ und $T_{Ü1}$, so dass die Abkühlrate 1 K/h bis 100 K/h, vorzugsweise 4 K/h bis 100 K/h, vorzugsweise 10K/h bis 50 K/h beträgt, insbesondere zumindest über den Temperaturbereich von $T_{Ü2}$ auf $T_{Ü1}$.

Es wurde gefunden, dass ein zu schnelles Aufheizen oder Abkühlen zu welligen Blechen führt, die zudem auch eine Art plastische Deformation innerhalb des Blechs aufweisen. Diese Beobachtung kann auf die Phasenumwandlung der Legierung zurückzuführen sein. Beim Durchgang durch das Zweiphasengebiet wandelt sich beim Aufheizen die raumzentrierte $\alpha$-Phase (BCC) in die enger gepackte flächenzentrierte $\gamma$-Phase (FCC). Dadurch kommt es zu einer Verkürzung der Bleche. Beim Abkühlen wiederum erfolgt eine Rückumwandlung, bei der sich idealerweise die Ursprungsgeometrie wiedereinstellt. Bei dem erfindungsgemäßen Verfahren wird die Legierung zweimal einer Phasenumwandlung unterzogen. Es ist anzunehmen, dass diese beobachtete Deformation auf den Volumensprung bei der Hin- und Rückumwandlung zurückzuführen ist. Durch die erfindungsgemäßen langsameren Aufheiz- und Abkühlraten kann die Bildung dieser Welligkeit und die Deformation vermieden werden.

Heiz- und Abkühlraten von 20 K/h und 10 K/h können verwendet werden. Geeignete Raten können abhängig von der Form des Vorprodukts ausgewählt werden. Beispielsweise können Aufheiz- und Abkühlraten von unterhalb von 50 K/h bei einem Stapel von 50 Blechen und unterhalb von 35 K/h für einen Stapel aus 100 Blechen verwendet werden.

Die Abkühlrate kann auch über zumindest den Temperaturbereich von $T_{Ü2}$ auf $T_{Ü1}$ 1 K/h bis 100 K/h, vorzugsweise 4K/h bis 50 K/h, vorzugsweise 10K/h bis 50 K/h betragen, um die Planarität der Bleche beizubehalten. Eine langsamere Abkühlrate kann auch verwendet werden, die weichmagnetischen Eigenschaften zu verbessern, insbesondere die Induktion B zu erhöhen.

In einem Ausführungsbeispiel wird die Aufheizrate und/oder die Abkühlrate über einen größeren Temperaturbereich gezielt eingestellt. In einem Ausführungsbeispiel beträgt die Aufheizrate über zumindest den Temperaturbereich von 900°C auf $T_1$ 1 K/h bis 100 K/h, vorzugsweise 4K/h bis 100 K/h, vorzugsweise 10K/h bis 50 K/h.

In einem Ausführungsbeispiel beträgt die Abkühlrate über zumindest den Temperaturbereich von $T_1$ auf 900°C 1K/h bis 100 K/h, vorzugsweise 4K/h bis 50K/h, vorzugsweise 10K/h bis 50 K/h.

In einem Ausführungsbeispiel wird die Temperatur $T_1$ der Wärmbehandlung im FCC Phasengebiet näher definiert, sodass $T_1$ zwischen $T_{Ü2}$ und $(T_{Ü2} + 100°C)$ liegt, d.h. die Temperatur $T_1$ liegt nur etwas höher als die Übergangstemperatur $T_{Ü2}$ vom FCC/BCC Zweiphasengebiet ins FCC-Gebiet. In weiteren Ausführungsbeispielen liegt $T_1$ zwischen $(T_{Ü2} + 2°C)$ und $(T_{Ü2} + 100°C)$ oder $(T_{Ü2} + 2°C)$ und $(T_{Ü2} + 50°C)$. Temperaturen in diesem Bereich können verwendet werden, die weichmagnetischen Eigenschaften zu verbessern, beispielsweise eine höhere Induktion und niedrigere Koerzitivfeldstärke zu erzielen.

Wenn das Vorprodukt die Gestalt eines Blechs aufweist, kann dieses während der Wärmebehandlung auch bei der genannten Aufheizrate und Abkühlrate deformieren, sodass das Blech nicht mehr plan, sondern wellenförmig ist. Dies ist bei manchen Anwendungen wie einem Blechpaket unerwünscht. Das zusätzliche Gewicht kann verwendet werden, eine Deformation des Vorprodukts zu verhindern und die Planarität des Blechs beizubehalten.

Das Vorprodukt kann die Gestalt mehrerer gestapelter Bleche oder eines oder mehrerer Blechpakete aufweisen. In diesem Ausführungsbeispiel kann das Gewicht Das Vorprodukt weist die Gestalt mehrerer gestapelter Bleche oder eines oder mehrerer Blechpakete auf. Das Gewicht kann auf dem Stapel bzw. dem obersten Blech des Stapels während der Wärmebehandlung angeordnet werden.

**In** manchen Ausführungsformen weist das Vorprodukt die Gestalt mehrere gestapelter Bleche auf, die jeweils mit einer elektrisch isolierten Beschichtung beschichtet sind. **In** diesem Ausführungsbeispiel kann das Gewicht auf dem Stapel bzw. dem obersten Blech des Stapels während der Wärmebehandlung angeordnet werden.

**In** einem Ausführungsbeispiel wird ferner das Vorprodukt zur elektrischen Isolation mit einer Oxidschicht beschichtet. Dieses Ausführungsbeispiel kann zum Beispiel verwendet werden, wenn das Vorprodukt in einem Blechpaket verwendet wird. Das Vorprodukt kann beispielsweise mit einer Schicht aus Magnesium-Methylat oder Zirkon-Propylat beschichtet werden, welche sich während der Wärmebehandlung in eine isolierende Oxidschicht umwandelt.

Das Vorprodukt kann auch zur Ausbildung der elektrisch isolierenden Schicht in einer sauerstoff- oder wasserdampfhaltigen Atmosphäre wärmebehandelt werden. Diese gezielte Oxidation kann nach der die magnetischen Eigenschaften einstellenden Wärmebehandlung nachträglich in einer separaten Wärmebehandlung zur gezielten Oxidation durchgeführt werden.

**In** einem Ausführungsbeispiel werden ferner aus dem Vorprodukt gestanzte, lasergeschnittene, oder erodierte Blechschnitte einer abschließenden Glühung unterzogen, und die geglühten Einzelbleche danach mittels eines isolierenden Klebers zu einem Blechpaket verklebt, oder die geglühten Einzelbleche werden oberflächlich zur Einstellung einer isolierend wirkenden Schicht oxidiert und anschließend zum Blechpaket verklebt, geschweißt, oder lasergeschweißt, oder die geglühten Einzelbleche werden mit einer anorganisch-organischen Hybridbeschichtung wie z.B. Remisol-C5 beschichtet und anschließend zum Blechpaket weiterverarbeitet.

Nach der Wärmebehandlung kann das Vorprodukt einer weiteren Wärmebehandlung unterzogen werden, die in einer sauerstoff- oder wasserdampfhaltigen Atmosphäre stattfindet. Diese zusätzliche Wärmebehandlung kann verwendet werden, die Isolierschicht zu bilden oder die Dicke einer bereits vorhandenen Isolierschicht auf dem Vorprodukt bzw. Blechen zu erhöhen.

Nach der Wärmebehandlung kann zumindest ein Blechpaket aus den gestapelten Blechen durch Erodieren, Laserschneiden oder Wasserstrahlschneiden gefertigt werden. In diesem Ausführungsbeispiel weisen die Bleche somit während der Wärmbehandlung nicht die Endkontur auf, sondern können rechteckig sein.

In einem Ausführungsbeispiel werden die Bleche zunächst aus einem Band abgelängt, gestapelt und als Stapel wärmebehandelt. Die mehreren Bleche können nach dem Wärmebehandeln mittels eines isolierenden Klebers verklebt, oder oberflächlich zur Einstellung einer isolierend wirkenden Schicht oxidiert werden und anschließend verklebt oder lasergeschweißt, oder mit einer anorganisch-organischen Hybridbeschichtung beschichtet werden. Anschließend wird dieser Stapel bzw. Verbund zum Blechpaket weiterverarbeitet werden. Das Blechpaket mit der Außenkontur für eine Anwendung für einen Stator oder einen Rotor kann aus dem Stapel bzw. Verbund, beispielswiese durch Erodieren geschnitten werden.

In weiteren Ausführungsbeispielen werden weitere Parameter der Wärmebehandlung näher definiert, um die weichmagnetischen Eigenschaften und/oder die Form des Vorprodukts weiter zu verbessern.

In einem Ausführungsbeispiel ist $960°C \leq T_1 < T_m$.

In einem Ausführungsbeispiel wird das Vorprodukt für eine Zeitdauer von über 15 Minuten oberhalb von $T_{Ü2}$ wärmebehandelt, und danach auf $T_2$ abgekühlt.

In einem Ausführungsbeispiel wird das Vorprodukt zumindest von $T_1$ auf Raumtemperatur abgekühlt und danach von Raumtemperatur auf $T_2$ aufgeheizt wird. Die Wärmebehandlung bei $T_2$ kann als ein separate Wärmebehandlung zu einem späteren Zeitpunkt durchgeführt werden.

Wenn nach der Glühung bei $T_1$ auf Raumtemperatur abgekühlt wird, kann danach vorteilhafterweise eine Nachglühung bei $T_2$ erfolgen. Dies verbessert insbesondere die weichmagnetischen Parameter Permeabilität, die größer wird, $H_c$, die kleiner wird, und Hystereseverluste, die kleiner werden. Der Effekt der Nachglühung auf die Induktionswerte ist dagegen eher gering. Alternativ kann die Temperatur bei $T_2$ während der Abkühlphase gehalten werden.

In einem Ausführungsbeispiel wird das Vorprodukt bei $T_1$ für eine Zeit $t_1$ wärmebehandelt, wobei 15 Minuten $\leq t_1 \leq$

20 Stunden ist, und danach von $T_1$ auf $T_2$ abgekühlt. In einem Ausführungsbeispiel wird das Vorprodukt von $T_1$ auf $T_2$ abgekühlt, bei $T_2$ für eine Zeit $t_2$ wärmebehandelt, wobei 30 Minuten $\leq t_2 \leq$ 20 Stunden ist, und danach von $T_2$ auf Raumtemperatur abgekühlt.

In Ausführungsbeispielen, bei denen das Vorprodukt von $T_1$ auf Raumtemperatur abgekühlt wird, kann das Vorprodukt danach von Raumtemperatur auf $T_2$ aufgeheizt werden und bei $T_2$ nach einem der hierin beschriebenen Ausführungsbeispiele wärmebehandelt werden.

Da die Legierung aufgrund des geringen Co-Gehaltes keinen Ordnung-Unordnung-Übergang aufweist, wird auf eine Abschreckung über den Temperaturbereich von 800°C bis 600°C verzichtet. Die Abkühlrate von 800°C bis 600°C kann beispielsweise zwischen 100°C/h bis 500°C/h liegen. Sie kann aber prinzipiell auch noch langsamer gewählt werden. Die genannten Abkühlraten können auch problemlos bis zur Abkühlung auf Raumtemperatur durchgeführt werden.

Erfindungsgemäß beträgt somit die Abkühlrate über zumindest den Temperaturbereich von $T_{Ü2}$ auf $T_{Ü1}$ 1K/h bis 100 K/h, vorzugsweise 4K/h bis 50 K/h, vorzugsweise 10K/h bis 50 K/h. Eine Abkühlrate von 1K/h bis 100 K/h, vorzugsweise 4K/h bis 50 K/h, vorzugsweise 10K/h bis 50 K/h über den Temperaturbereich $T_1$ bis 900°C oder $T_1$ bis $T_2$ kann auch verwendet werden.

Die Abkühlrate von $T_2$ auf Raumtemperatur hat weniger Einfluss auf die magnetischen Eigenschaften, so dass das Vorprodukt von $T_2$ auf Raumtemperatur bei einer Rate von 10°C/h bis 50,000°C/h, vorzugsweise 100°C/h bis 1000°C/h abgekühlt werden kann.

In einem weiteren alternativen Ausführungsbeispiel wird das Vorprodukt von $T_1$ bis Raumtemperatur mit einer Abkühlrate von 4K/h bis 50 K/h abgekühlt. In Ausführungsbeispielen mit einer langsamen Abkühlung von $T_1$ auf Raumtemperatur, beispielsweise mit einer Abkühlrate von weniger als 100K/h, vorzugsweise weniger als 50K/h kann auch auf eine weitere Wärmebehandlung bei der Temperatur $T_2$ verzichtet werden.

Nach dem Wärmebehandeln kann das Vorprodukt bzw. die weichmagnetische Legierung, aus der das Vorprodukt gebildet ist:

eine maximale Permeabilität $\mu_{max} \geq 5.000$, und/oder einen elektrischen Widerstand $\rho \geq 0,25\ \mu\Omega m$, Hystereseverluste $P_{Hys} \leq 0,07$ J/kg bei einer Amplitude von 1,5 T, und/oder eine Koerzitivfeldstärke $H_c$ von $\leq 0,7$ A/cm und/oder Induktion $B \geq 1,90$ T bei 100 A/cm aufweisen, oder

eine maximale Permeabilität $\mu_{max} \geq 10.000$, und/oder einen elektrischen Widerstand $\rho \geq 0,25\ \mu\Omega m$, und/oder Hystereseverluste $P_{Hys} \leq 0,06$ J/kg bei einer Amplitude von 1,5 T, und/oder eine Koerzitivfeldstärke $H_c$ von $\leq 0,6$ A/cm und Induktion $B \geq 1,95$ T bei 100 A/cm aufweisen, oder

eine maximale Permeabilität $\mu_{max} \geq 12.000$, vorzugsweise $\mu_{max} \geq 17.000$ und/oder einen elektrischen Widerstand $\rho \geq 0,30\ \mu\Omega m$, und/oder Hystereseverluste $P_{Hys} \leq 0,05$ J/kg bei einer Amplitude von 1,5 T, und/oder eine Koerzitivfeldstärke $H_c$ von $\leq 0,5$ A/cm, vorzugsweise eine Koerzitivfeldstärke $H_c$ von $\leq 0,4$ A/cm, vorzugsweise eine Koerzitivfeldstärke $H_c$ von $\leq 0,3$ A/cm und/oder Induktion $B \geq 2,00$ T bei 100 A/cm aufweisen

Die Hystereseverluste $P_{Hyst}$ werden aus den Ummagnetisierungsverlusten P bei einer Amplitude der Induktion von 1,5T über den y- Achsenabschnitt in einer Auftragung P/f über die Frequenz f durch lineare Regression ermittelt. Die lineare Regression erfolgt dabei über mindestens 8 Messwerte, welche über den Frequenzbereich 50 Hz bis 1kHz annähernd gleichmäßig (z.B. bei 50, 100, 200, 300, 400, 500, 600, 700, 800, 900, 1.000Hz) verteilt sind.

Das Vorprodukt kann aus einem Gussblock gewonnen werden, der aus einer Schmelze durch Vakuum-Induktionsschmelzen, Elektroschlacke- Umschmelzen oder Vakuum-Lichtbogen-Umschmelzen hergestellt ist. Die Schmelze besteht aus

| 5 Gew.-% | $\leq$ Co | $\leq$ 25 Gew.-% |
|---|---|---|
| 0,3 Gew.-% | $\leq$ V | $\leq$ 5,0 Gew.-% |
| 0 Gew.-% | $\leq$ Cr | $\leq$ 3,0 Gew.-% |
| 0 Gew.-% | $\leq$ Si | $\leq$ 3,0 Gew.-% |
| 0 Gew.-% | $\leq$ Mn | $\leq$ 3,0 Gew.-% |
| 0 Gew.-% | $\leq$ Al | $\leq$ 3,0 Gew.-% |
| 0 Gew.-% | $\leq$ Ta | $\leq$ 0,5 Gew.-% |
| 0 Gew.-% | $\leq$ Ni | $\leq$ 0,5 Gew.-% |
| 0 Gew.-% | $\leq$ Mo | $\leq$ 0,5 Gew.-% |
| 0 Gew.-% | $\leq$ Cu | $\leq$ 0,2 Gew.-% |
| 0 Gew.-% | $\leq$ Nb | $\leq$ 0,25 Gew.-% |
| 0 Gew.-% | $\leq$ Ti | $\leq$ 0,05 Gew.-% |

(fortgesetzt)

| 0 Gew.-% | ≤ Ce | ≤ 0,05 Gew.-% |
|---|---|---|
| 0 Gew.-% | ≤ Ca | ≤ 0,05 Gew.-% |
| 0 Gew.-% | ≤ Mg | ≤ 0,05 Gew.-% |
| 0 Gew.-% | ≤ C | ≤ 0,02 Gew.-% |
| 0 Gew.-% | ≤ Zr | ≤ 0,1 Gew.-% |
| 0 Gew.-% | ≤ O | ≤ 0,025 Gew.-% |
| 0 Gew.-% | ≤ S | ≤ 0,025Gew.-% |

Rest Eisen, wobei Cr+Si+Al+Mn ≤ 3,0 Gew.-%, und bis zu 0,2 Gew.-% an anderen Verunreinigungen besteht. Andere Verunreinigungen sind zum Beispiel B, P, N, W, Hf, Y, Re, Sc, Be, andere Lanthanoide außer Ce.

Die Schmelze wird gegossen und zu einem Gussblock erstarrt. Der Gussblocks wird umgeformt, um das Vorprodukt herzustellen. Die Umformung kann mittels Heißwalzen und/oder Schmieden und/oder Kaltumformung durchgeführt werden.

In einem Ausführungsbeispiel wird der Gussblock mittels Warmwalzen bei Temperaturen zwischen 900°C und 1300°C zu einer Bramme und anschließend zu einem Warmband mit einer Dicke $D_1$ umgeformt.

In manchen Ausführungsbeispielen wird das Warmband danach mittels Kaltwalzen zu einem Band mit einer Dicke $D_2$ umgeformt, wobei 0,05 mm ≤ $D_2$ ≤ 1,0 mm ist, und $D_2$ < $D_1$ ist.

In einem Ausführungsbeispiel wird zunächst ein Warmband der Dicke $D_1$ durch Stranggießen hergestellt, welches danach mittels Kaltwalzen zu einem Band mit einer Dicke $D_2$ umgeformt wird, wobei 0,05 mm ≤ $D_2$ ≤ 1,0 mm ist, und $D_2$ < $D_1$ ist.

In einem Ausführungsbeispiel ist der Kaltverformungsgrad durch Kaltwalzen >40%, vorzugsweise >80%, vorzugsweise >95%.

In einem Ausführungsbeispiel wird der Gussblock mittels Warmwalzen zu einem Knüppel bei Temperaturen zwischen 900°C und 1300°C umgeformt und danach mittels Kaltziehen zu einem Draht umgeformt.

In einem Ausführungsbeispiel ist der Kaltverformungsgrad durch Kaltziehen >40%, vorzugsweise >80%, vorzugsweise >95%.

In einem Ausführungsbeispiel beträgt nach dem Wärmebehandeln die mittlere Korngröße mindestens 100 $\mu$m, vorzugsweise mindestens 200 $\mu$m, ganz besonders bevorzugt mindestens 250 $\mu$m und die weichmagnetische Legierung weist eine Induktion $B_{100}$ (Induktion B bei H=100A/cm) von mindestens 1,90T, bevorzugt von mindestens 1,95T auf. Eine mittlere Korngröße von mindestens 100 $\mu$m, 200 $\mu$m oder 250 $\mu$m begünstigt höhere Induktionswerte, und vor allem sinkt die Koerzitivfeldstärke $H_c$ mit zunehmender Korngröße $d_k$.

Auf Grund des niedrigeren Co-Gehalts sind die Rohstoffkosten der Legierung gegenüber einer Legierung auf 49 Gew.-% Fe, 49 Gew.-% Co, 2 % V-Basis reduziert. Erfindungsgemäß wird eine FeCo- Legierung mit einem maximalen Kobaltgehalt von 25 Gewichtsprozent geschaffen, die bessere weichmagnetische Eigenschaften, insbesondere eine deutlich höhere Permeabilität, bietet als andere FeCo-Legierungen mit einem maximalen Kobaltgehalt von 25 Gewichtsprozent, wie die bestehenden und kommerziell erhältlichen FeCo-Legierungen wie VACOFLUX 17, AFK 18 oder HIPERCO 15. Diese bestehenden und kommerziell erhältlichen Legierungen weisen eine maximale Permeabilität von unterhalb 5000 auf.

Die Legierung weist keine Ordnungseinstellung auf, sodass diese Legierung im Unterschied zu Legierungen mit über 30 Gew.-% Co ohne einen vorgeschalteten Abschreckvorgang kaltgewalzt werden kann. Ein Abschreckvorgang ist insbesondere bei großen Mengen an Materialien nur schwierig zu kontrollieren, da ausreichend schnelle Abkühlraten nur schwierig zu erreichen sind, sodass eine Ordnung mit einer daraus resultierenden Versprödung der Legierung stattfinden kann. Das Fehlen eines Ordnung-Unordnung-Übergangs bei der Legierung vereinfacht somit die großtechnische Herstellung.

Ein merklicher Ordnungs-Unordnungs-Übergang, so wie bei CoFe-Legierungen mit einem Co-Gehalt von mehr als 30 Gew.-% kann für eine Legierung mittels DSC-Messungen (Differential Scanning Calorimetry) ermittelt werden, da er zu einem Peak in der DSC-Messung führt. Solch ein Peak wird für die Legierung bei einer DSC-Messung unter den gleichen Bedingungen nicht ermittelt.

Gleichzeitig bietet diese neue Legierung aber signifikant niedrigere Hystereseverluste als die bisher bekannten und kommerziell erhältlichen Legierungen mit Co-Gehalten zwischen 10 und 30 Gew.-% sowie eine höhere Induktion neben dem höheren Permeabilitätsniveau. Die FeCo-Legierung kann auch kostengünstig großtechnisch hergestellt werden.

Die Legierung kann auf Grund der höheren Permeabilität bei Anwendungen wie einem Rotor oder einen Stator eines Elektromotors verwendet werden, um die Größe des Rotors bzw. Stators und somit des Elektromotors zu verkleinern und/oder die Leistung zu steigern. Beispielsweise kann bei der gleichen Baugröße und/oder bei dem gleichen Gewicht ein höheres Drehmoment erzeugt werden, was bei der Anwendung in elektrisch oder hybrid-betriebenen Kraftfahrzeugen vorteilhaft wäre.

In einem Ausführungsbeispiel weist die Legierung eine maximale Permeabilität $\mu_{max} \geq 10.000$, einen elektrischen Widerstand $\rho \geq 0,28\ \mu\Omega m$, Hystereseverluste $P_{Hys} \leq 0,055$ J/kg bei einer Amplitude von 1,5 T, eine Koerzitivfeldstärke $H_c$ von $\leq 0,5$ A/cm und eine Induktion $B \geq 1,95$ T bei 100 A/cm auf. Diese Kombination von Eigenschaften ist besonders vorteilhaft für Anwendung als oder in einem Rotor oder einem Stator eines Elektromotors, um die Größe des Rotors bzw. Stators und somit des Elektromotors zu verkleinern und/oder die Leistung zu steigern, oder bei der gleichen Baugröße und/oder bei dem gleichen Gewicht ein höheres Drehmoment zu erzeugen.

Die weichmagnetische Legierung kann somit in einer elektrischen Maschine, wie beispielweise als oder in einem Stator und/oder Rotor eines Elektromotors und/oder eines Generators, und/oder in einem Transformator und/oder in einem elektromagnetischen Aktor verwendet werden. Sie kann in Form eines Blechs bereitgestellt werden, beispielsweise mit einer Dicke von 0,5 mm bis 0,05 mm. Mehrere Bleche aus der Legierung können zu einem Blechpaket gestapelt werden, das als Stator oder Rotor verwendet wird.

Die Legierung weist einen elektrischen Widerstand von mindestens 0,25 $\mu\Omega m$ auf, vorzugsweise minimal 0,3 $\mu\Omega m$. Die Wirbelstromverluste können über die Wahl einer etwas niedrigeren Banddicke auf ein niedrigeres Niveau abgesenkt werden.

In weiteren Ausführungsbeispielen wird die Zusammensetzung der weichmagnetischen Legierung näher definiert, wobei 10 Gew.-% $\leq$ Co $\leq$ 20 Gew.-%, vorzugsweise 15 Gew.-% $\leq$ Co $\leq$ 20 Gew.-% und 0,3 Gew.-% $\leq$ V $\leq$ 5,0 Gew.-%, vorzugsweise 1,0 Gew.-% $\leq$ V $\leq$ 3,0 Gew.-%, vorzugsweise 1,3 Gew.-% $\leq$ V $\leq$ 2,7 Gew.-% und/oder 0,1 Gew.-% $\leq$ Cr+Si $\leq$ 2,0 Gew.-%, vorzugsweise 0,2 Gew.-% $\leq$ Cr+Si $\leq$ 1,0 Gew.-%, vorzugsweise 0,25 Gew.-% $\leq$ Cr+Si $\leq$ 0,7 Gew.-% gilt.

In einem Ausführungsbeispiel ist die Summenformel näher definiert, wobei 0,2 Gew.-% $\leq$ Cr+Si+Al+Mn $\leq$ 1,5 Gew.-%, vorzugsweise 0,3 Gew.-% $\leq$ Cr+Si+Al+Mn $\leq$ 0,6 Gew.-% gilt.

Die weichmagnetische Legierung kann auch Silizium aufweisen, wobei 0,1 Gew.-% $\leq$ Si $\leq$ 2,0 Gew.-%, vorzugsweise 0,15 Gew.-% $\leq$ Si $\leq$ 1,0 Gew.-%, vorzugsweise 0,2 Gew.-% $\leq$ Si $\leq$ 0,5 Gew.-% gilt.

Aluminium und Silizium können gegeneinander ausgetauscht werden, sodass in einem Ausführungsbeispiel die Summe an Si und Aluminium (Si+Al) 0 Gew.-% $\leq$ (Si + Al) $\leq$ 3,0 Gew.-% ist.

Die Legierungen sind nahezu kohlenstofffrei und weisen maximal bis zu 0,02 Gew.-% Kohlenstoff auf, vorzugsweise $\leq$ 0,01 Gew.-% Kohlenstoff. Dieser maximale Kohlenstoffgehalt ist als unvermeidbare Verunreinigung anzusehen.

Bei den Legierungen können Kalzium, Beryllium und/oder Magnesium lediglich in geringen Maßen bis zu 0,05 Gew.-% zur Desoxidation und Entschwefelung zulegiert werden. Um eine besonders gute Desoxidation zu erreichen, können bis zu 0,05 Gew.-% Cer oder Cermischmetall zulegiert werden.

Die Curie-Temperatur der Legierung kann bei der Auswahl der Temperaturen $T_1$ und/oder $T_2$ berücksichtigt werden. Beispielsweise kann $T_{Ü1} > T_c$ sein, wobei $T_c$ die Curie-Temperatur ist, und $T_c \geq 900$°C ist. In einem Ausführungsbeispiel wird $T_{ü1} > T_2 > T_c$ gewählt.

Bei Zusammensetzungen, bei denen es eine Trennung des Phasenübergangs vom BCC zum BCC+FCC-Zweiphasengebiet und der Curie-Temperatur $T_c$ gibt, besteht ein weiterer Temperaturbereich mit hoher Selbstdiffusion, sodass durch Wärmebehandlung in diesem Bereich oder aufgrund von Abkühlung durch diesen Bereich eine größere BCC-Kornstruktur und damit bessere weichmagnetische Eigenschaften ermöglicht werden. Weiterhin führt die Trennung von Zweiphasengebiet und Curie-Temperatur $T_c$ dazu, dass beim Abkühlen sowohl der Durchgang durch das Zweiphasengebiet BCC/FCC als auch der Übergang in das Gebiet der reinen BCC-Phase vollständig im paramagnetischen Zustand erfolgt. Mit der Auswahl der Temperatur $T_2$, sodass $T_{ü1} > T_2 > T_c$ ist, können die weichmagnetischen Eigenschaften weiter verbessert werden.

Die verbesserten magnetischen Eigenschaften können erfindungsgemäß durch eine Wärmebehandlung erreicht werden, die auf die Zusammensetzung wie folgt abgestimmt wird. Insbesondere hat es sich herausgestellt, dass die Ermittlung der Phasenübergangstemperaturen für die ausgewählten Zusammensetzungen und die Bestimmung der Wärmebehandlungstemperaturen und Abkühlrate in Bezug auf diese ermittelten Phasenübergangstemperaturen zu verbesserten magnetischen Eigenschaften führt. Außerdem wird berücksichtigt, dass die Legierungen mit einem Kobaltgehalt von maximal 25 Gewichtsprozent keinen Ordnungs-Unordnungs-Übergang aufweist, sodass im Fertigungsweg keine Abschreckung notwendig ist, um eine Ordnung und daraus resultierende Versprödung zu vermeiden.

Herkömmlich werden CoFe-Legierungen in Banddicken im Bereich von 0,50 mm bis hin zu sehr dünnen Abmessungen von 0,050 mm eingesetzt. Zur Bandverarbeitung wird herkömmlich das Material warmgewalzt und anschließend an Enddicke kaltgewalzt. Beim Abkühlen findet nach dem Warmwalzen eine versprödende Ordnungseinstellung bei ca. 730°C statt, sodass für eine ausreichende Kaltwalzbarkeit zusätzlich eine spezielle Zwischenglühung mit anschließendem Abschrecken zur Unterdrückung der Ordnungseinstellung erfolgen muss. Auf dieses Abschrecken wird bei der Legierung verzichtet, da sie keinen Ordnungs-Unordnungs-Übergang aufweist, was das Herstellen vereinfacht.

CoFe-Legierungen werden zur Erzielung der magnetischen Eigenschaften einer abschließenden Wärmebehandlung unterzogen, die auch als magnetische Schlussglühung bezeichnet wird. Dazu wird das Material bis zur Glühtemperatur aufgeheizt, bei der Glühtemperatur eine bestimmte Zeit gehalten und anschließend mit definierter Geschwindigkeit abgekühlt. Es ist vorteilhaft, diese Schlussglühung bei möglichst hohen Temperaturen und unter trockener reiner Wasserstoffatmosphäre durchzuführen, da bei hohen Temperaturen erstens die Reduzierung von Verunreinigungen durch den Wasserstoff effizienter wird und zweitens die Kornstruktur gröber wird und damit die weichmagnetischen Eigenschaften wie Koerzitivfeldstärke und Permeabilität besser werden.

Die Glühtemperatur ist im System CoFe in der Praxis nach oben beschränkt, da im binären System bei ca. 950°C ein Phasenübergang stattfindet, der die magnetische und ferritische BCC- Phase in die nichtmagnetische und austenitische FCC-Phase überführt. Bei Zulegierung entsteht zwischen FCC und BCC-Phase ein Zweiphasengebiet, in dem beide Phasen koexistieren. Der Übergang zwischen der BCC-Phase und dem Zweiphasen- oder BCC/FCC-Mischgebiet liegt bei einer Temperatur $T_{Ü1}$ und der Übergang zwischen dem Zweiphasengebiet und der FCC-Phase bei einer Temperatur $T_{Ü2}$, wobei $T_{Ü2} > T_{Ü1}$ ist. Die Lage und Größe des Zweiphasengebietes hängt weiter von der Art und dem Umfang der Zulegierung ab. Findet die Glühung im Zweiphasengebiet oder im FCC-Gebiet statt, können nach Abkühlung und nicht vollständiger Rückumwandlung Reste der FCC- Phase die Magnetik schädigen. Selbst bei vollständiger Rückumwandlung bleibt ein schädigender Effekt über die zusätzlich entstandenen Korngrenzen, da die Koerzitivfeldstärke sich umgekehrt proportional zum Korndurchmesser verhält. Konsequenterweise werden die bekannten, kommerziell erhältlichen Legierungen mit Co-Gehalten um 20 Gew.-% bei Temperaturen unterhalb des Zweiphasengebietes BCC+FCC schlussgeglüht. So lautet z.B. für AFK 18 die Empfehlung 3h/850°C, für AFK 1 3h/900°C. Für VACOFLUX 17 lautet die Empfehlung 10h/850°C. Bei derart niedrigen Schlussglühtemperaturen und aufgrund der relativ hohen magnetokristallinen Anisotropie ($K_1$ ca. 45.000 J/m$^3$ bei 17 Gew.-% Co) ist das Potential für besonders gute weichmagnetische Eigenschaften bei diesen FeCo-Legierungen begrenzt. So kann man z.B. mit VACOFLUX 17-Band lediglich Maximalpermeabilitäten um 4.000 erreichen, bei einer Koerzitivfeldstärke von typischerweise 1 A/cm, was den Einsatz begrenzt, besonders im Hinblick auf Motorund Generatoranwendungen.

Im Gegensatz zu diesen bekannten Schlussglühungsverfahren ermöglicht die Zusammensetzung eine Wärmebehandlung, die bessere magnetische Eigenschaften hervorbringt als die bei FeCo- Legierungen übliche einstufige Glühung mit Ofenkühlung, unabhängig davon, in welchem Temperaturbereich die einstufige Glühung erfolgt. Die Zulegierungen werden so gewählt, dass die untere Grenze des Zweiphasengebietes und der BCC/FCC-Phasenübergang nach oben geschoben werden, um Glühungen bei hohen Temperaturen, beispielsweise oberhalb 925°C im reinen BCC- Gebiet, zu ermöglichen. Glühungen bei solch hohen Temperaturen sind mit bisher bekannten FeCo- Legierungen nicht darstellbar.

Weiterhin wird aufgrund der Zusammensetzung die Breite des Zweiphasengebietes, d.h. die Differenz zwischen der unteren Übergangstemperatur $T_{Ü1}$ und der oberen Übergangstemperatur $T_{Ü2}$, möglichst schmal gehalten. Somit werden durch eine Schlussglühung oberhalb des Zweiphasengebietes in Verbindung mit einer Abkühlung durch das Zweiphasengebiet und anschließender Haltezeit oder kontrollierter Abkühlung im reinen BCC-Gebiet die Vorteile einer hohen Schlussglühung, d.h. die Aufhebung möglicher magnetisch ungünstiger Texturen, die Reinigungswirkung unter $H_2$, und das Wachstum von großen Körnern erhalten, ohne das Risiko von magnetisch schädlichen Resten der FCC- Phase.

Es wurde gefunden, dass Zusammensetzungen mit einem Phasenübergang zwischen dem reinen BCC-Gebiet und dem BCC/FCC Mischgebiet bei höheren Temperaturen, beispielsweise oberhalb von 925°C und mit einem schmalen Zweiphasengebiet, beispielsweise von weniger als 45K, deutlich verbesserte magnetische Eigenschaften aufweisen. Zusammensetzungen mit dieser bestimmten Kombination von Merkmalen des Phasendiagramms werden erfindungsgemäß ausgewählt und entsprechend wärmebehandelt, um ein hohe Maximalpermeabilität von mehr als 5000 oder mehr als 10.000 oder sogar mehr als 15.000 zu gewährleisten.

Vanadium wurde in einer Fe-Co Legierung als eines der effektivsten Elemente ausgemacht, welches den elektrischen Widerstand erhöht und gleichzeitig für Legierungen mit niedrigem Co-Gehalt das Zweiphasengebiet zu höheren Temperaturen verschiebt. Mit niedrigerem Co-Gehalt ist die Anhebung der Übergangstemperaturen durch Vanadium effektiver. Bei der Fe-17Co Legierung können durch Zugabe von ca. 2% Vanadium die Übergangstemperaturen sogar über den Wert der binären FeCo-Zusammensetzung angehoben werden.

Im binären Fe-Co System liegt ab ca. 15% Kobalt die BCC/FCC Phasenumwandlung bei niedrigeren Temperaturen als die Curie-Temperatur. Da die FCC-Phase paramagnetisch ist, wird der magnetische Phasenübergang nicht mehr durch die Curie-Temperatur, sondern durch die BCC/FCC Phasenumwandlung bestimmt. Vanadium in ausreichend hohen Mengen verschiebt die BCC/FCC Phasenumwandlung über die Curie-Temperatur $T_c$, sodass die paramagnetische BCC- Phase sichtbar wird.

Wenn jedoch der Vanadiumgehalt zu hoch ist, wird die Breite des Mischgebiets erhöht. Diese Zusammensetzungen weisen niedrigere maximale Permeabilitätswerte auf, obwohl der Phasenübergang zwischen dem BCC/FCC Mischgebiet und dem reinen BCC-Gebiet bei höheren Temperaturen stattfindet. Folglich wurde festgestellt, dass die Zusammensetzung sowohl auf die Temperaturen, bei denen die Phasenübergänge stattfinden, als auch auf die Breite des Mischgebiets Einfluss hat, und bei der Auswahl der Zusammensetzung berücksichtigt werden sollte. Die Temperaturen der Wärmebehandlung können in Bezug auf die Temperaturen, bei denen die Phasenübergänge für diese Zusammensetzung stattfinden, ausgewählt werden, um die höchsten Permeabilitätswerte zu erreichen.

Es wurde somit gefunden, dass eine genauere Ermittlung der Temperaturen, bei denen die Phasenübergänge stattfinden, für eine bestimmte Zusammensetzung bei der Optimierung des Herstellungsverfahrens vorteilhaft ist. Diese können mittels DSC-Messungen (Differential Scanning Calorimetry) ermittelt werden. Die DSC Messung kann bei einer Probenmasse von 50 mg und einer DSC Aufheizrate von 10 Kelvin pro Minute durchgeführt werden und die so ermittelten Temperaturen der Phasenübergänge beim Aufheizen und beim Abkühlen der Probe können verwendet werden, um die Temperaturen für die Wärmebehandlung zu bestimmen.

Chrom und andere Elemente können beigemischt werden, um z.B. den elektrischen Widerstand oder die mechanischen Eigenschaften zu verbessern. Chrom senkt, wie die meisten anderen Elemente, das Zweiphasengebiet der binären Fe-17Co Legierung ab. Der Anteil der Zulegierung neben Vanadium wird bevorzugt daher so gewählt, dass es in Summe mit Vanadium zu einer Anhebung des Zweiphasengebietes gegenüber der binären FeCo-Legierung kommt. Dazu müssen die Verunreinigungen und Elemente, die besonders stark den Austenit stabilisieren (z.B. Nickel) so niedrig wie möglich gehalten werden.

Als bevorzugt haben sich folgende Gehalte zur Erzielung von sehr guten magnetischen Eigenschaften erwiesen: Kobalt von 5 Gew.-% ≤ Co ≤ 25 Gew.-% und bevorzugt sind Gehalte von 10 Gew.-% ≤ Co ≤ 20 Gew.-%, ganz besonders bevorzugt sind Gehalte von 15 Gew.-% ≤ Co ≤ 20 Gew.-%

Vanadium von 0,3 Gew.-% ≤ V ≤ 5,0 Gew.-% und bevorzugt sind Gehalte von 1,0 Gew.-% ≤ V ≤ 3,0 Gew.-% und folgende Summenformel: 0,2 Gew.-% ≤ Cr + Si + Al + Mn ≤ 3,0 Gew.-%.

Die Legierungen sind nahezu kohlenstofffrei und weisen maximal bis zu 0,02 Gew.-% Kohlenstoff auf, vorzugsweise ≤ 0,01 Gew.-% Kohlenstoff. Dieser maximale Kohlenstoffgehalt ist als unvermeidbare Verunreinigung anzusehen.

Bei den Legierungen können Kalzium, Beryllium und/oder Magnesium lediglich in geringen Maßen bis zu 0,05 Gew.-% zur Desoxidation und Entschwefelung zulegiert werden. Um eine besonders gute Desoxidation und Entschwefelung zu erreichen, können bis zu 0,05 Gew.-% Cer oder Cermischmetall zulegiert werden.

Die Zusammensetzung ermöglicht eine weitere Verbesserung. Kobalt hat in der paramagnetischen BCC Phase einen höheren Diffusionskoeffizienten als in der ferromagnetischen BCC Phase. Daher ermöglicht Vanadium durch die Trennung von Zweiphasengebiet und Curie-Temperatur $T_c$ einen weiteren Temperaturbereich mit hoher Selbstdiffusion, sodass durch Wärmebehandlung in diesem Bereich oder aufgrund von Abkühlung durch diesen Bereich eine größere BCC- Kornstruktur und damit bessere weichmagnetische Eigenschaften ermöglicht werden. Weiterhin führt die Trennung von Zweiphasengebiet und Curie-Temperatur $T_c$ dazu, dass beim Abkühlen sowohl der Durchgang durch das Zweiphasengebiet BCC/FCC als auch der Übergang in das Gebiet der reinen BCC-Phase vollständig im. paramagnetischen Zustand erfolgt. Dies wirkt sich ebenfalls positiv auf die weichmagnetischen Eigenschaften aus.

In einem Ausführungsbeispiel ist die gemessene Dichte der geglühten Legierung ρ(alloy) um mehr als 0,10% niedriger ist, als die per Dreisatz aus dem mittleren Atomgewicht der metallischen Elemente (inkl. Si) der Legierung MAG(alloy), aus dem mittleren Atomgewicht der metallischen Elemente der entsprechenden binären FeCo-Legierung MAG(binary alloy) und aus der gemessenen Dichte ρ(binary alloy) dieser geglühten binären FeCo-Legierung berechnete Dichte ρ(alloy[calc]).

Als Formel:

$$\rho(\text{alloy}) < 0{,}999 \times \rho(\text{alloy[calc]})$$

mit

$$\rho\big(\text{alloy}[\text{calc}]\big) = \rho(\text{binary alloy}) \times \frac{\text{MAG(alloy)}}{\text{MAG(binary alloy)}}$$

Auf Grund der Wärmebehandlung kann der Schwefelgehalt in der fertigen Legierung kleiner als in der Schmelze sein. Zum Beispiel kann die Obergrenze des Schwefelgehalts in der Schmelze 0,025 Gewichtsprozent sein, während in der fertigen weichmagnetischen Legierung die Obergrenze bei 0,015 Gewichtsprozent liegt.

In einem Ausführungsbeispiel wird ein Blechpaket aus mehreren gestapelten elektrisch isolierten Belchen einer weichmagnetischen Legierung bereitgestellt. Die weichmagnetische Legierung besteht aus

| 5 Gew.-% | ≤ Co | ≤ 25 Gew.-% |
|---|---|---|
| 0,3 Gew.-% | ≤ V | ≤ 5,0 Gew.-% |
| 0 Gew.-% | ≤ Cr | ≤ 3,0 Gew.-% |
| 0 Gew.% | ≤ Si | ≤ 3,0 Gew.-% |
| 0 Gew.% | ≤ Mn | ≤ 3,0 Gew.-% |
| 0 Gew.-% | ≤ Al | ≤ 3,0 Gew.-% |

(fortgesetzt)

| 0 Gew.% | $\leq$ Ta | $\leq$ 0,5 Gew.-% |
|---------|-----------|-------------------|
| 0 Gew.% | $\leq$ Ni | $\leq$ 0,5 Gew.-% |
| 0 Gew.% | $\leq$ Mo | $\leq$ 0,5 Gew.-% |
| 0 Gew.% | $\leq$ Cu | $\leq$ 0,2 Gew.-% |
| 0 Gew.% | $\leq$ Nb | $\leq$ 0,25 Gew.-% |
| 0 Gew.% | $\leq$ Ti | $\leq$ 0,05 Gew.-% |
| 0 Gew.% | $\leq$ Ce | $\leq$ 0,05 Gew.-% |
| 0 Gew.% | $\leq$ Ca | $\leq$ 0,05 Gew.-% |
| 0 Gew.% | $\leq$ Mg | $\leq$ 0,05 Gew.-% |
| 0 Gew.% | $\leq$ C | $\leq$ 0,02 Gew.-% |
| 0 Gew.% | $\leq$ Zr | $\leq$ 0,1 Gew.-% |
| 0 Gew.% | $\leq$ O | $\leq$ 0,025 Gew.-% |
| 0 Gew.% | $\leq$ S | $\leq$ 0,015 Gew.-% |

Rest Eisen, wobei Cr+Si+Al+Mn $\leq$ 3,0 Gew.-%, und bis zu 0,2 Gew.-% an anderen Verunreinigungen besteht. Die weichmagnetische Legierung weist eine maximale Permeabilität $\mu_{max} \geq$ 10.000, und einen elektrischen Widerstand $\rho \geq$ 0,28 $\mu\Omega$m und Hystereseverluste $P_{Hys} \leq$ 0,055 J/kg bei einer Amplitude von 1,5 T, eine Koerzitivfeldstärke $H_c$ von $\leq$ 0,5 A/cm und eine Induktion B $\geq$ 1,95 T bei 100 A/cm auf. Das Blechpaket weist einen Füllfaktor F $\geq$ 90% auf, bevorzugt > 94%.

Bei dem Herstellen der Legierung und dem erfindungsgemäßen Verfahren wird das Zweiphasengebiet zweimal durchschritten, wobei eine Phasenumwandlung zweimal verursacht wird. Durch eine Phasenumwandlung entsteht in den Blechen einen Volumensprung, der zu einer plastischen Deformation der Bleche führt, die sich in der Praxis durch das Bilden einer wellenartigen Form beobachten lässt. Folglich wird die ursprüngliche Planarität der Bleche nicht erhalten und der Füllfaktor des Blechpakets reduziert. Die Planarität der Bleche und der Füllfaktor des Blechpakets kann jedoch gewährleistet werden, wenn die Aufheizrate und/oder der Glühtemperatur erfindungsgemäß eingestellt wird. Gegebenenfalls kann ferner ein zusätzliches Gewicht auf den Belchen während der Wärmebehandlung angeordnet werden, um die Planarität der Bleche zu gewährleisten und den Füllfaktor des Blechpakets zu erreichen.

In einem Ausführungsbeispiel weist die weichmagnetische Legierung des Blechpakets eine maximale Permeabilität $\mu_{max} \geq$ 12.000, vorzugsweise $\mu_{max} \geq$ 17.000 auf.

In einem Ausführungsbeispiel weist die weichmagnetische Legierung Hystereseverluste $P_{Hys} \leq$ 0,05 J/kg, und/oder eine Koerzitivfeldstärke $H_c$ von $\leq$ 0,4 A/cm, vorzugsweise $H_c$ von $\leq$ 0,3 A/cm, und/oder eine Induktion B $\geq$ 2,00 T bei 100 A/cm auf.

In einem Ausführungsbeispiel wird die Zusammensetzung der weichmagnetischen Legierung näher definiert, wobei

10 Gew.-% $\leq$ Co $\leq$ 20 Gew.-%, vorzugsweise 15 Gew.-% $\leq$ Co $\leq$ 20 Gew.-% gilt, oder

0,5 Gew.-% $\leq$ V $\leq$ 4,0 Gew.-%, vorzugsweise 1,0 Gew.-% $\leq$ V $\leq$ 3,0 Gew.-%, vorzugsweise 1,3 Gew.-% $\leq$ V $\leq$ 2,7 Gew.-% gilt, oder 0,1 Gew.-% $\leq$ Cr $\leq$ 2,0 Gew.-%, vorzugsweise 0,2 Gew.-% $\leq$ Cr $\leq$ 1,0 Gew.-%, vorzugsweise 0,3 Gew.-% $\leq$ Cr $\leq$ 0,7 Gew.-% gilt, oder

0,1 Gew.-% $\leq$ Si $\leq$ 2,0 Gew.-%, vorzugsweise 0,15 Gew.-% $\leq$ Si $\leq$ 1,0 Gew.-%, vorzugsweise 0,2 Gew.-% $\leq$ Si $\leq$ 0,5 Gew.-% gilt und/oder

die Summenformel 0,1 Gew.-% $\leq$ Cr+Si+Al+Mn $\leq$ 1,5 Gew.-%, vorzugsweise 0,2 Gew.-% $\leq$ Cr+Si+Al+Mn $\leq$ 0,6 Gew.-% gilt.

Das Blechpaket kann abhängig von der Anwendung eine unterschiedliche Anzahl an Bleche aufwiest. Zum Beispiel kann das Blechpaket mindestens zwei Bleche, beispielsweise für Aktoren oder mindestens 50 oder 100 Bleche für Rotoren und Statoren aufweisen. Die Bleche können jeweils eine Dicke von 0,05mm bis 0,50mm aufweisen und die elektrische Isolation zwischen benachbarten Blechen kann eine Dicke von 0,1$\mu$m bis 2,0$\mu$m aufweisen.

Das Blechpakets nach einem der hierin beschriebenen Ausführungsbeispielen kann in einer elektrischen Maschine, wie beispielweise als oder in einem Stator und/oder Rotor eines Elektromotors und/oder eines Generators, und/oder in einem Transformator und/oder in einem elektromagnetischen Aktor verwendet werden.

In einem alternativen Ausführungsbeispiel wird in einem Verfahren zum Herstellen einer weichmagnetischen Legierung die Temperaturen der Wärmbehandlung, insbesondere die Temperatur $T_1$ im FCC Phasengebiet näher definiert, wobei die Aufheizrate und Abkühlrate wie weiter oben beschrieben eingestellt werden können. In diesem Ausführungsbeispiel wird ein Vorprodukt bereitgestellt, das eine Zusammensetzung, die aus

| 5 Gew.-% | ≤ Co | ≤ 25 Gew.-% |
|---|---|---|
| 0,3 Gew.-% | ≤ V | ≤ 5,0 Gew.-% |
| 0 Gew.-% | ≤ Cr | ≤ 3,0 Gew.-% |
| 0 Gew.-% | ≤ Si | ≤ 3,0 Gew.-% |
| 0 Gew.-% | ≤ Mn | ≤ 3,0 Gew.-% |
| 0 Gew.-% | ≤ Al | ≤ 3,0 Gew.-% |
| 0 Gew.-% | ≤ Ta | ≤ 0,5 Gew.-% |
| 0 Gew.-% | ≤ Ni | ≤ 0,5 Gew.-% |
| 0 Gew.-% | ≤ Mo | ≤ 0,5 Gew.-% |
| 0 Gew.-% | ≤ Cu | ≤ 0,2 Gew.-% |
| 0 Gew.-% | ≤ Nb | ≤ 0,25 Gew.-% |
| 0 Gew.-% | ≤ Ti | ≤ 0,05 Gew.-% |
| 0 Gew.-% | ≤ Ce | ≤ 0,05 Gew.-% |
| 0 Gew.-% | ≤ Ca | ≤ 0,05 Gew.-% |
| 0 Gew.-% | ≤ Mg | ≤ 0,05 Gew.-% |
| 0 Gew.-% | ≤ C | ≤ 0,02 Gew.-% |
| 0 Gew.-% | ≤ Zr | ≤ 0,1 Gew.-% |
| 0 Gew.-% | ≤ O | ≤ 0,025 Gew.-% |
| 0 Gew.-% | ≤ S | ≤ 0,015 Gew.-% |

Rest Eisen, wobei Cr+Si+Al+Mn ≤ 3,0 Gew.-%, und bis zu 0,2 Gew.-% an anderen schmelzbedingten Verunreinigungen besteht, und das eine Kaltwalztextur oder eine Fasertextur aufweist. Andere Verunreinigungen sind zum Beispiel B, P, N, W, Hf, Y, Re, Sc, Be, andere Lanthanoide außer Ce.

Das Vorprodukt weist einen Phasenübergang von einem BCC-Phasengebiet, in ein BCC/FCC Mischgebiet zu einem FCC Phasengebiet auf, wobei bei aufsteigender

Temperatur der Phasenübergang zwischen dem BCC Phasengebiet und dem BCC/FCC Mischgebiet bei einer ersten Übergangstemperatur $T_{\ddot{U}1}$ und bei weiter ansteigender Temperatur der Übergang zwischen dem BCC/FCC Mischgebiet und dem FCC Phasengebiet bei einer zweiten Übergangstemperatur $T_{\ddot{U}2}$ stattfindet, wobei $T_{\ddot{U}2} > T_{\ddot{U}1}$ und die Differenz $T_{\ddot{U}2} - T_{\ddot{U}1}$ geringer als 45K ist, vorzugsweise geringer als 25K.

Das Vorprodukt wird folgender Wärmebehandlung unterzogen:

Aufheizen des Vorprodukts zu einer Temperatur $T_1$ und danach
Wärmebehandeln des Vorprodukts bei der Temperatur $T_1$ für eine Zeitdauer $t_1$ und danach Abkühlung von $T_1$ bis Raumtemperatur.

Alternativ wird das Vorprodukt folgender Wärmebehandlung unterzogen:

Aufheizen des Vorprodukts zu einer Temperatur $T_1$ und danach
Wärmebehandeln des Vorprodukts bei der Temperatur $T_1$ für eine Zeitdauer $t_1$ und danach
Abkühlen des Vorprodukts auf einer Temperatur $T_2$, und danach
Wärmebehandeln des Vorprodukts bei der Temperatur $T_2$ für eine Zeitdauer $t_2$, und danach
Abkühlen des Vorprodukts von $T_2$ auf Raumtemperatur, wobei $T_1 > T_2$ ist.

In diesen zwei Verfahren wird die Temperatur $T_1$ so eingestellt, dass $T_1$ zwischen $T_{\ddot{U}2}$ und ($T_{\ddot{U}2}$ + 100°C), $T_2$ unterhalb $T_{\ddot{U}1}$ liegt, wobei 700°C ≤ $T_2$ ≤ 1050°C und $T_2$ < $T_1$ ist. In weiteren Ausführungsbeispielen liegt $T_1$ zwischen ($T_{\ddot{U}2}$ + 2°C) und ($T_{\ddot{U}2}$ + 100°C), oder zwischen ($T_{\ddot{U}2}$ + 5°C) und ($T_{\ddot{U}2}$ + 100°C).

In einem weiteren Ausführungsbeispiel wird die Kaltverformungsgrad erhöht, um verbesserte weichmagnetische Eigenschaften, insbesondere eine hohe Induktion B und niedrige Koerzitivfeldstärke $H_c$ zu erreichen. In diesem Ausführungsbeispiel kann die Aufheizrate und die Abkühlrate wie weiter oben beschrieben eingestellt werden.

In diesem Ausführungsbeispiel kann ein Gussblock aus einer Schmelze hergestellt werden, die beispielsweise durch Vakuum- Induktionsschmelzen, ElektroschlackeUmschmelzen oder Vakuum-Lichtbogen-Umschmelzen bereitgestellt wird, wobei die Schmelze aus

| 5 Gew.-% | ≤ Co | ≤ 25 Gew.-% |
|---|---|---|
| 0,3 Gew.-% | ≤ V | ≤ 5,0 Gew.-% |

(fortgesetzt)

| | | |
|---|---|---|
| 0 Gew.-% | $\leq$ Cr | $\leq$ 3,0 Gew.-% |
| 0 Gew.-% | $\leq$ Si | $\leq$ 3,0 Gew.-% |
| 0 Gew.-% | $\leq$ Mn | $\leq$ 3,0 Gew.-% |
| 0 Gew.-% | $\leq$ Al | $\leq$ 3,0 Gew.-% |
| 0 Gew.-% | $\leq$ Ta | $\leq$ 0,5 Gew.-% |
| 0 Gew.-% | $\leq$ Ni | $\leq$ 0,5 Gew.-% |
| 0 Gew.-% | $\leq$ Mo | $\leq$ 0,5 Gew.-% |
| 0 Gew.-% | $\leq$ Cu | $\leq$ 0,2 Gew.-% |
| 0 Gew.-% | $\leq$ Nb | $\leq$ 0,25 Gew.-% |
| 0 Gew.-% | $\leq$ Ti | $\leq$ 0,05 Gew.-% |
| 0 Gew.-% | $\leq$ Ce | $\leq$ 0,05 Gew.-% |
| 0 Gew.-% | $\leq$ Ca | $\leq$ 0,05 Gew.-% |
| 0 Gew.-% | $\leq$ Mg | $\leq$ 0,05 Gew.-% |
| 0 Gew.-% | $\leq$ C | $\leq$ 0,02 Gew.-% |
| 0 Gew.-% | $\leq$ Zr | $\leq$ 0,1 Gew.-% |
| 0 Gew.-% | $\leq$ O | $\leq$ 0,025 Gew.-% |
| 0 Gew.-% | $\leq$ S | $\leq$ 0,025Gew.-% |

Rest Eisen, wobei Cr+Si+Al+Mn $\leq$ 3,0 Gew.-%, und bis zu 0,2 Gew.-% an anderen Verunreinigungen besteht.

Die Schmelze wird gegossen, zu einem Gussblock aus einer weichmagnetischen Legierung erstarrt und der Gussblock umformt.

Der Gussblock wird mittels Warmwalzen bei Temperaturen zwischen 900°C und 1300°C zu einer Bramme und anschließend zu einem Warmband mit einer Dicke $D_1$ und danach mittels Kaltverformung zu einem Band mit einer Dicke $D_2$ umgeformt wird, wobei der Kaltverformungsgrad >40%, vorzugsweise >80%, vorzugsweise >95% ist und 0,05 mm $\leq$ $D_2 \leq$ 1,0 mm ist, und $D_2 < D_1$ ist, wobei das Band eine Kaltwalztextur oder eine Fasertextur aufweist.

Wie bei den oben gennannten Verfahren weist die weichmagnetische Legierung des Bands einen Phasenübergang von einem BCC-Phasengebiet, in ein BCC/FCC Mischgebiet zu einem FCC Phasengebiet auf, wobei bei aufsteigender Temperatur der Phasenübergang zwischen dem BCC Phasengebiet und dem BCC/FCC Mischgebiet bei einer ersten Übergangstemperatur $T_{\ddot{U}1}$ und bei weiter ansteigender Temperatur der Übergang zwischen dem BCC/FCC Mischgebiet und dem FCC Phasengebiet bei einer zweiten Übergangstemperatur $T_{\ddot{U}2}$ stattfindet, wobei $T_{\ddot{U}2} > T_{\ddot{U}1}$ und die Differenz $T_{\ddot{U}2} - T_{\ddot{U}1}$ geringer als 45K ist, vorzugsweise geringer als 25K.

Das Band wird folgender Wärmebehandlung unterzogen:

Aufheizen des Vorprodukts zu einer Temperatur $T_1$ und danach
Wärmebehandeln des Vorprodukts bei der Temperatur $T_1$ für eine Zeitdauer $t_1$ und danach Abkühlung von $T_1$ bis Raumtemperatur,

oder
folgender Wärmebehandlung unterzogen:

Aufheizen des Vorprodukts zu einer Temperatur $T_1$ und danach
Wärmebehandeln des Vorprodukts bei der Temperatur $T_1$ für eine Zeitdauer $t_1$ und danach
Abkühlen des Vorprodukts auf einer Temperatur $T_2$, und danach
Wärmebehandeln des Vorprodukts bei der Temperatur $T_2$ für eine Zeitdauer $t_2$, und danach
Abkühlen des Vorprodukts von $T_2$ auf Raumtemperatur, wobei $T_1 > T_2$ ist.

In diesem Ausführungsbeispiel liegt $T_1$ oberhalb $T_{\ddot{U}2}$ und $T_2$ unterhalb $T_{\ddot{U}1}$, wobei 920°C $\leq T_1 < T_m$, und 700°C $\leq T_2 \leq$ 1050°C, wobei $T_2 < T_1$ und $T_m$ die Solidustemperatur ist.

Eine Abkühlrate von 10 bis 50K/h zwischen $T_1$ und z.B. 900°C ist vorteilhaft zu Erzielung guter weichmagnetischer Eigenschaften und kann eine separate Nachglühung oder längeres Halten bei der Temperatur $T_2$ ersparen.

Ausführungsbeispiele der Erfindung werden nun anhand der Zeichnungen und folgender Beispiele näher erläutert.

Figur 1    zeigt eine schematische Darstellung der erfindungsgemäßen Wärmebehandlung.
Figur 2    zeigt eine Abbildung der Koerzitivfeldstärke $H_c$ in Abhängigkeit der Abkühlrate.

Figur 3    zeigt eine Abbildung der Induktion B bei 20A/cm in Abhängigkeit der Abkühlrate.

Figur 4    zeigt metallographische Schliffe zur Bestimmung der Korngröße an zwei Beispielen.

Figur 5    zeigt metallographische Schliffe eines Si-haltigen Beispiels 93/0505 nach Glühungen im $\gamma$-Gebiet.

Figur 6    zeigt eine Abbildung der Induktion $B_{20}$(B bei H=20 A/cm) in Abhängigkeit von der Korngröße.

Figur 7    zeigt eine Abbildung der Koerzitivfeldstärke $H_c$ in Abhängigkeit von der Korngröße.

Figur 8    zeigt eine Abbildung der Remanenz $B_r$ und $B_{20}$(B bei H=20 A/cm).

Figur 9    zeigt eine Abbildung der Koerzitivfeldstärke $H_c$ in Abhängigkeit von der Kaltverformung.

Figur 10    zeigt eine Abbildung der Induktion B(20 A/cm) in Abhängigkeit von der Kaltverformung.

Erfindungsgemäß wird ein Vorprodukt aus einer weichmagnetische Legierung mit einer Zusammensetzung bereitgestellt, die aus

| | | |
|---|---|---|
| 5 Gew.-% | $\leq$ Co | $\leq$ 25 Gew.-% |
| 0,3 Gew.-% | $\leq$ V | $\leq$ 5,0 Gew.-% |
| 0 Gew.-% | $\leq$ Cr | $\leq$ 3,0 Gew.-% |
| 0 Gew.-% | $\leq$ Si | $\leq$ 3,0 Gew.-% |
| 0 Gew.-% | $\leq$ Mn | $\leq$ 3,0 Gew.-% |
| 0 Gew.-% | $\leq$ Al | $\leq$ 3,0 Gew.-% |
| 0 Gew.-% | $\leq$ Ta | $\leq$ 0,5 Gew.-% |
| 0 Gew.-% | $\leq$ Ni | $\leq$ 0,5 Gew.-% |
| 0 Gew.-% | $\leq$ Mo | $\leq$ 0,5 Gew.-% |
| 0 Gew.-% | $\leq$ Cu | $\leq$ 0,2 Gew.-% |
| 0 Gew.-% | $\leq$ Nb | $\leq$ 0,25 Gew.-% |
| 0 Gew.-% | $\leq$ Ti | $\leq$ 0,05 Gew.-% |
| 0 Gew.-% | $\leq$ Ce | $\leq$ 0,05 Gew.-% |
| 0 Gew.-% | $\leq$ Ca | $\leq$ 0,05 Gew.-% |
| 0 Gew.-% | $\leq$ Mg | $\leq$ 0,05 Gew.-% |
| 0 Gew.-% | $\leq$ C | $\leq$ 0,02 Gew.-% |
| 0 Gew.-% | $\leq$ Zr | $\leq$ 0,1 Gew.-% |
| 0 Gew.-% | $\leq$ O | $\leq$ 0,025 Gew.-% |
| 0 Gew.-% | $\leq$ S | $\leq$ 0,015 Gew.-% |

Rest Eisen, wobei Cr+Si+Al+Mn $\leq$ 3,0 Gew.-%, und bis zu 0,2 Gew.-% an anderen schmelzbedingten Verunreinigungen besteht. Die Verunreinigungen können beispielsweise eines oder mehrerer der Elemente B, P, N, W, Hf, Y, Re, Sc, Be, andere Lanthanoide außer Ce sein. Zur Steigerung des elektrischen Widerstandes können neben dem Legierungselement Vanadium auch eines oder mehrere der Gruppe von Cr, Si, Al und Mn in dem Maße zulegiert werden, wobei die folgende Summenformel erfüllt ist:

0,05 Gew.-% $\leq$ Cr + Si + Al + Mn $\leq$ 3,0 Gew.-%

Die Legierung kann in Form eines Vorprodukts bereitgestellt werden, das eine Kaltwalztextur oder eine Fasertextur aufweist. Das Vorprodukt kann ein Band oder ein oder mehrere Bleche sein, das zum Herstellen eines Blechpakets geeignet ist.

Die weichmagnetische Legierung bzw. das Vorprodukt weist einen Phasenübergang von einem BCC-Phasengebiet (auch $\alpha$ Gebiet genannt), in ein BCC/FCC Mischgebiet (auch $\alpha + \gamma$ Gebiet genannt) zu einem FCC Phasengebiet (auch $\gamma$ Gebiet genannt) auf, wobei bei aufsteigender Temperatur der Phasenübergang zwischen dem BCC Phasengebiet und dem BCC/FCC Mischgebiet bei einer ersten Übergangstemperatur $T_{Ü1}$ und bei weiter ansteigender Temperatur der Übergang zwischen dem BCC/FCC Mischgebiet und dem FCC Phasengebiet bei einer zweiten Übergangstemperatur $T_{Ü2}$ stattfindet, wobei $T_{Ü2} > T_{Ü1}$ und die Differenz $T_{Ü2} - T_{Ü1}$ geringer als 45K ist, vorzugsweise geringer als 25K.

Die Legierung wird vorzugsweise in Vakuuminduktionsöfen erschmolzen. Es sind jedoch auch die Verarbeitung über Vakuumlichtbogenumschmelzen und Elektroschlackeumschmelzen möglich. Die Schmelze erstarrt zuerst zu einem Block, der von der Oxidhaut befreit wird und danach bei Temperaturen zwischen 900 °C und 1300 °C geschmiedet oder warmgewalzt wird. Die Entfernung der Oxidhaut kann alternativ auch an zuerst geschmiedeten oder warmgewalzten Stangen erfolgen. Das gewünschte Maß kann durch Warmumformung von Bändern, Knüppeln oder Stangen erzielt werden. Warmgewalztes Material kann durch Strahlen, Schleifen oder Schälen von oberflächlichen Oxiden befreit werden. Das gewünschte Endmaß kann jedoch auch alternativ durch Kaltumformung von Bändern, Stangen oder Drähten erfolgen. Bei kaltgewalzten Bändern kann zur Befreiung von Oxidwurzeln aus dem Warmwalzvorgang ein Schleifvorgang zwischengeschoben werden. Sollte eine zu hohe Verfestigung nach einer Kaltumformung erfolgt sein, können eine oder mehrere Zwischenglühungen zur Erholung und Rekristallisation bei Temperaturen zwischen 400 °C und 1300 °C durchgeführt werden. Die Dicke oder der Durchmesser für die Zwischenglühung sollte dabei so gewählt werden, dass vorzugsweise eine Kaltverformung > 40% bis zur Enddicke erreicht wird, besonders bevorzugt eine Kaltverformung von > 80% und von > 95%.

Danach erfolgt eine Wärmebehandlung gemäß einem der Ausführungsbeispiele der Erfindung, die auch als magnetische Schlussglühung bezeichnet wird. Die Schlussglühung erfolgt bevorzugt unter reiner trockener Wasserstoffatmosphäre. Glühungen unter Schutzgas oder im Vakuum sind ebenfalls möglich.

In einem Ausführungsbeispiel wird das Vorprodukt zu einer Temperatur $T_1$ aufgeheizt und danach bei der Temperatur $T_1$ für eine Zeitdauer $t_1$ wärmebehandelt und danach von $T_1$ bis Raumtemperatur abgekühlt. In einem alternativen Ausführungsbeispiel wird das Vorprodukt zu einer Temperatur $T_1$ aufgeheizt und danach bei der Temperatur $T_1$ für eine Zeitdauer $t_1$ wärmebehandelt, danach auf eine Temperatur $T_2$ abgekühlt und danach bei der Temperatur $T_2$ für eine Zeitdauer $t_2$ wärmebehandelt und danach von $T_2$ auf Raumtemperatur abgekühlt. Die Temperatur $T_1$ ist größer als die Temperatur $T_2$. Ferner liegt $T_1$ oberhalb $T_{Ü2}$, d.h. im FCC Phasengebiet, und $T_2$ liegt unterhalb $T_{Ü1}$, d.h. im BCC Phasengebiet, und $920°C \leq T_1 < T_m$, wobei $T_m$ die Solidustemperatur ist, und $700°C \leq T_2 \leq 1050°C$.

Für beide Verfahren beträgt die Aufheizrate über zumindest den Temperaturbereich von $T_{Ü1}$ auf $T_{Ü2}$ 1 K/h bis 100 K/h, vorzugsweise 10K/h bis 50 K/h und die Abkühlrate beträgt über zumindest den Temperaturbereich von $T_{Ü2}$ auf $T_{Ü1}$ 1K/h bis 100 K/h, vorzugsweise 10K/h bis 50 K/h.

In einem Ausführungsbeispiel wird ein Blechpaket aus mehreren Blechen aus einer Legierung hergestellt. Das folgende Verfahren wird verwendet. Die weichmagnetische Legierung in Gestalt eines Bandes wird bereitgestellt, das mit einer elektrisch isolierenden Schicht, beispielsweise aus einem Oxid, beschichtet ist. Das Band wird abgelängt und Blechtafeln hergestellt. Diese Blechtafeln werden gestapelt und die gestapelten Blechtafeln in einem Haubenofen nach einem dieser Ausführungsbeispiele geglüht bzw. wärmebehandelt. Danach können die Bleche oxidiert werden.

Nach der Wärmebehandlung werden die Bleche zusammengeklebt, wobei die beschichteten Bleche mit Klebstoffschicht zu einem Verbund gestapelt werden, gereinigt und danach wird ein Blechpaket in Form für eine Anwendung wie einen Rotor oder einen Stator aus dem Verbund geformt, beispielsweise mit Erodieren.

In einem Ausführungsbeispiel wurden Stapel von 50 oder 100 Blechen (210 x 140 x 0,15 mm$^3$) geglüht. Als plane Unterlage diente bei fast allen Versuchen eine etwa 2 kg schwere Keramikplatte (244 x 213 x 10 mm$^3$). Die abgelängten Bleche werden wird folgt geglüht, um die Ebenheit der Bleche zu gewährleisten und den Füllfaktor im fertigen Blechpaket zu erhöhen. Insbesondere wird die Aufheizrate und Abkühlrate eingestellt, um eine plastische Deformation der ursprünglich planen Bleche zu vermeiden, und so eine ausreichende Planarität über die Wärmebehandlung zu erhalten.

In manchen Ausführungsbeispielen wird zusätzlich zu den eingestellten Aufheizraten und Abkühlraten eine Beschwerung auf den gestapelten Blechen bzw. Tafel gelegt. Die Beschwerung wurde variiert, wobei in den meisten Fällen eine massive NCT3-Deckplatte (1.4841) mit einem Gewicht von 6,5 kg verwendet wurde (270 x 150 x 20 mm$^3$). Das Eigengewicht der Blechstapel betrug je nach Stapelhöhe 1,7 kg (50 Bleche) bzw. 3,4 kg (100 Bleche).

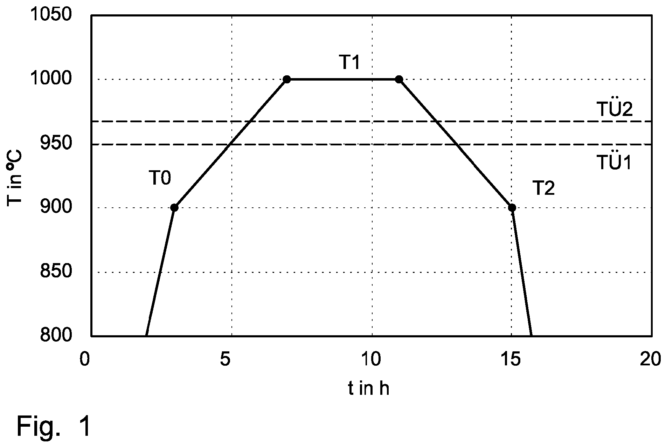

Figur 1 zeigt einen schematischen Verlauf der Versuchsglühungen. Die gestrichelten Linien deuten den erwarteten Bereich für das Zweiphasengebiet an. Dieses Zweiphasengebiet ist abhängig von der Zusammensetzung der Legierung.

Die Übergangstemperaturen $T_{Ü1}$ und $T_{Ü2}$ können mittels DSC Messungen für eine bestimmte Zusammensetzung ermittelt werden. Tabelle 1 zeigt die Zusammensetzung sowie Übergangstemperaturen für vier Beispiele.

Tabelle 1

| Charge 93/ | Co Gew. % | V Gew. % | Cr Gew. % | Si Gew. % | 1. Onset Aufheizen ($T_{ü2}$) | Peak Aufheizen | 1. Onset Abkühlen ($T_{ü1}$) | Peak Abkühlen | $T_c$ Peak Aufheizen | $T_c$ Peak Abkühlen |
|---|---|---|---|---|---|---|---|---|---|---|
| 7604988 | 16,81 | 2,29 | 0,01 | 0,02 | 989 | 995 | 962 | 957 | 939 | 929 |
| 7605180 | 17,11 | 1,47 | 0,01 | 0,28 | 967 | 974 | 949 | 942 | 938 | 881 |
| 7605267 | 17,20 | 1,54 | 0,02 | 0,23 | 965 | 974 | 944 | 936 | 938 | 875 |
| 7409992 | 17,25 | 1,49 | 0,02 | 0,23 | 964 | 972 | 945 | 937 | 939 | 875 |

Das Glühprogramm wurde so gewählt, dass die Haltetemperatur $T_1$ mit 1000°C bis 1030°C oberhalb des Zweiphasengebiets und im FCC Phasengebiet liegt, wie in Figur 1 dargestellt. Dieses liegt bei der verwendeten Charge 7605180A laut DSC zwischen 949°C und 967°C (1. Onsets beim Abkühlen bzw. Aufheizen). Der Durchgang durch das Zweiphasengebiet wurde variiert, d.h. beim Aufheizen wurde eine Rampe von $T_0$ auf $T_1$ und beim Abkühlen wurde eine Rampe von $T_1$ auf $T_3$ gefahren, jeweils mit Heiz- bzw. Kühlraten zwischen 10 K/h und 100 K/h.

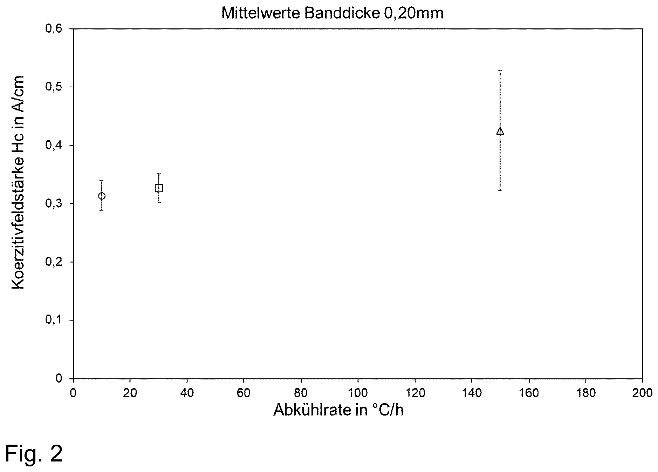

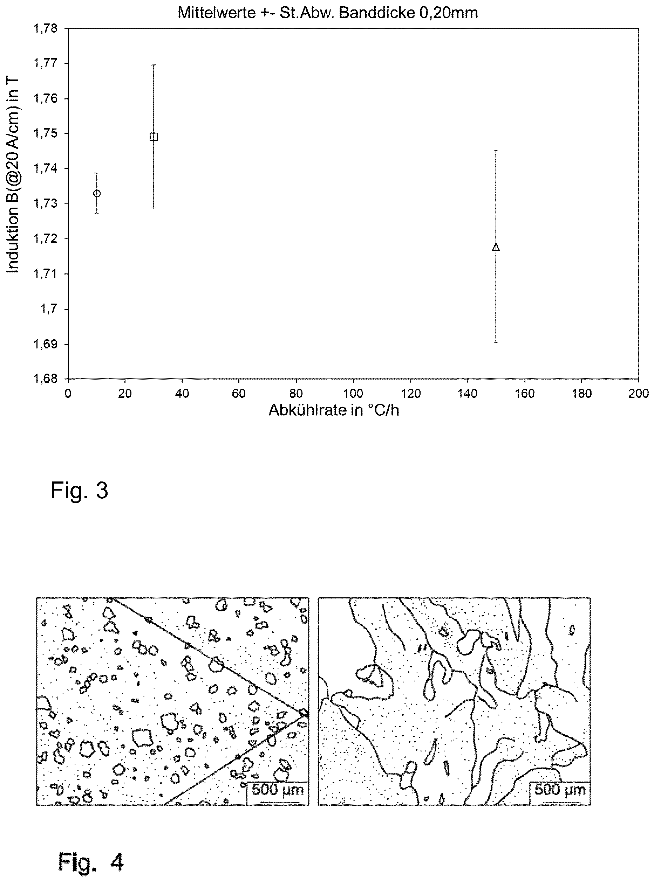

Figur 2 zeigt eine Abbildung der Koerzitivfeldstärke $H_c$ und Figur 3 eine Abbildung der Induktion B bei H=20A/cm in Abhängigkeit von der Abkühlrate.

Tabelle 2 zeigt eine Zusammenfassung der Koerzitivfeldstärke $H_c$ und Induktion B bei 20A/cm und 100 A/cm für drei Beispiele, die mit unterschiedliche Aufheizraten und Abkühlraten wärmebehandelt werden. Die Induktionswerte sind in allen Fällen ähnlich, wobei ein Vorteil der langsamen Aufheiz- und Abkühlraten in der verbesserten Planheit der Bleche liegt.

Tabelle 2

| # | Aufheizrate | Haltestufe | Abkühlrate | B(20 A/cm) in T | B(100 A/cm) in T | Hc in A/cm |
|---|---|---|---|---|---|---|
| 1 | von 920°C auf 1000°C mit 4 K/h | 4h 1000°C | von 1000°C auf 920°C mit 4 K/h | 1,706 | 2,009 | 0,432 |
| 2 | von 920°C auf 1000°C mit 20 K/h | 4h 1000°C | von 1000°C auf 920°C mit 20 K/h | 1,717 | 1,984 | 0,378 |
| 3 | von 920°C auf 1000°C mit 100 K/h | 4h 1000°C | von 1000°C auf 920°C mit 50 K/h | 1,722 | 1,987 | 0,433 |
| Charge 7605180A, Banddicke 0,20 mm | | | | | | |

Die gemessene Koerzitivfeldstärke ist etwas niedriger bei langsameren Abkühlraten und die gemessene Induktion ist etwas höher bei langsameren Abkühlraten. Folglich können die weichmagnetischen Eigenschaften dieser Legierungen verbessert werden, wenn Abkühlraten kleiner 100 K/h, vorzugweise kleiner 50 K/h oder kleiner 25 k/h verwendet werden.

Die Versuche zeigen, dass ein zu schnelles Aufheizen oder Abkühlen zu stark welligen Blechen führt, die zudem auch eine Art plastische Deformation innerhalb des Blechs aufweisen. Beim Durchgang durch das Zweiphasengebiet wandelt sich beim Aufheizen die raumzentrierte α-Phase in die enger gepackte flächenzentrierte γ-Phase. Dadurch kommt es zu einer Verkürzung der Bleche. Beim Abkühlen wiederum erfolgt eine Rückumwandlung, bei der sich idealerweise die Ursprungsgeometrie wiedereinstellt. Es ist anzunehmen, dass diese beobachtete Deformation auf eine unvollständige Hin- oder Rückumwandlung zurückzuführen ist. Die besten Ergebnisse wurden bei Heiz- und Abkühlraten von 20 K/h und 10 K/h erreicht. Bei höheren Raten, z.B. jeweils 50 K/h, ergaben sich bei 50 Blechen schon leichte Welligkeiten, bei 100 Blechen führten sogar bereits Raten von jeweils 35 K/h zu unbrauchbaren Blechen.

Es wurde festgestellt, dass neben dem Gewicht die Aufheiz- und Abkühlrate eingestellt werden können, um plane Bleche zu erhalten. Wenn die Blechstapel nicht oder nur minimal beschwert werden, können starke Welligkeiten auftreten. Führt man die Glühung unter gleichen Bedingungen durch, d.h. mit den gleichen geringen Aufheiz- und Abkühlraten von 10 K/h, aber mit einer massiven Beschwerung von 6,5 kg, so ergibt sich ein vollkommen planer Blechstapel. Trotz des hohen Gewichts ließen sich alle Bleche einwandfrei voneinander trennen.

Die Ergebnisse der Versuche sind in Tabelle 3 zusammengefasst, wobei folgende Bewertung der Glühungen verwendet wird:

- sehr gut: Die Bleche sind absolut plan und zeigen keine Randwelligkeiten
- gut: Die Bleche sind insgesamt plan und zeigen eine minimale Randwelligkeit
- schlecht: Die Bleche zeigen auf mindestens einer Hälfte eine plastische Deformation
- sehr schlecht: Die Bleche zeigen über das gesamte Blech hinweg eine plastische Deformation

| #Bleche | Beschwerung | | dT/dt Aufheizen | dT/dt Abkühlen | Bewertung | $T_0$ | $T_1$ Tmax | $T_2 = T_0$ |
|---|---|---|---|---|---|---|---|---|
| | in kg | | in K/h | in K/h | | in °C | in °C | in °C |
| 50 | 0 | ohne | 10 | 10 | sehr schlecht | 900 | 1000 | 900 |
| 50 | 0,3 | 1) | 50 | 25 | sehr schlecht | 930 | 1030 | 930 |
| | | | | | | | | |
| 50 | 8,0 | 2) | 10 | 10 | sehr gut | 900 | 1000 | 900 |

(fortgesetzt)

| #Bleche | Beschwerung | | dT/dt Aufheizen | dT/dt Abkühlen | Bewertung | $T_0$ | $T_1$ Tmax | $T_2 = T_0$ |
|---|---|---|---|---|---|---|---|---|
| | in kg | | in K/h | in K/h | | **in** °C | in °C | in °C |
| 50 | 6,5 | 3) | 50 | 50 | gut | 900 | 1000 | 900 |
| 50 | 6,5 | 3) | 50 | 25 | gut | 900 | 1000 | 900 |
| 50 | 6,5 | 3) | 100 | 25 | schlecht | 900 | 1000 | 900 |
| 50 | 6,5 | 3) | 100 | 50 | schlecht | 900 | 1000 | 900 |
| | | | | | | | | |
| 100 | 6,5 | 3) | 20 | 20 | sehr gut | 920 | 1000 | 920 |
| 100 | 6,5 | 3) | 35 | 35 | schlecht | 930 | 1000 | 930 |
| 100 | 6,5 | 3) | 100 | 50 | sehr schlecht | 900 | 1000 | 900 |

1) ungleichmäßige, nur sehr geringe Beschwerung durch 4 kleine Keramikplatten
2) gleichmäßige Beschwerung mit 4 großen Keramikplatten zu je 2 kg
3) gleichmäßige Beschwerung mit 1 massiver NCT3-Platte von 6,5kg Gewicht Tabelle 3

In einem der Glühversuche (100 Bleche, 20 K/h) wurde sowohl für die Unterlage als auch die Beschwerung eine massive NCT3-Platte verwendet. Die Bleche kamen in sehr guter Qualität aus der Glühung. Diese Ergebnisse zeigen, dass das langsame Durchfahren des Zweiphasengebiets für die Einstellung guter weichmagnetischer Eigenschaften förderlich ist.

In einem weiteren Gruppe von Beispielen wurde der Einfluss der Glühtemperatur $T_1$, die in der Figur 1 gezeigt ist, näher untersucht. Tabelle 4 zeigt die Zusamensetzungen der Beispiele.

Es wurde gefunden, dass eine genaue Einstellung der Glühtemperatur verwendet werden kann, um die magnetische Eigenschften, insbesondere die Induktionswerte, zu verbessern. Außerdem kann die Korngröße durch eine geeignete Einstellung der Glühtemperatur eingestellt werden.

Ein positiver Einfluss einer Glühung im $\gamma$-Gebiet auf die Induktionswerte B20 = B(20 A/cm), auf die Koerzitivfeldstärke $H_c$ und auf die Maximalpermeabilität $\mu_{max}$ wurde festgestellt. Ferner wird ein Einfluss auf die resultierende Korngröße beobachtet.

Untersucht wurden dazu vier Zusammensetzungen in Banddicke 0,35 mm mit unterschiedlichen Zusammensetzungen, siehe Tabelle 4, wobei alle nicht aufgeführten Elemente mit jeweils höchstens 0,02 Gew.-% vorliegen.

Tabelle 4

| Charge | Nominelle Zusammensetzung | Ist-Zusammensetzung (Gew.-%) | | | | |
|---|---|---|---|---|---|---|
| | | Fe | Co | V | Cr | Si |
| 93/0328 | Fe-17Co-1,0V-1Cr | Rest | 17,08 | 0,98 | 1,04 | - |
| 93/0329 | Fe-17Cr-1,5V-0,5Cr | Rest | 17,12 | 1,46 | 0,54 | - |
| 93/0330 | Fe-17Co-2,0V | Rest | 17,19 | 1,97 | - | - |
| 93/0505 | Fe-17Co-1,4V-0,4Si | Rest | 16,97 | 1,39 | - | 0,40 |

Diese Beispiele weisen etwa 17% Co und Zusätze von 1 bis 2 % V auf, wobei:

- Chargen 93/0328 und 932/0329 zusätzlich 0,5% bis 1,0% Cr gesetzt haben,
- Charge 93/0330 eine rein ternäre Fe-Co-V Legierung ohne Zusätze von Cr oder Si ist,
- Charge 93/0505 neben Fe-Co-V noch 0,4% Si aufweist.

Die Glühungen erfolgten bei verschiedenen Temperaturen im Bereich zwischen 850°C und 1150°C. Der Großteil der Glühungen erfolgte bei hohen Temperaturen von mindestens 1000°C im $\gamma$-Gebiet, ein Teil wurde aber auch bei niedrigeren Temperaturen im $\alpha$-Gebiet geglüht. Die genaue Lage des Zweiphasengebiets ist in Tabelle 5 aufgeführt. Man erkennt, dass hier eine große Variation vorliegt, d.h. die obere Phasengrenze $\alpha+\gamma\rightarrow\alpha$ liegt zwischen 928°C bei starkem Zusatz von Cr und 970°C bei Zulegierung von Si. Auch die Breite des Zweiphasengebiets variiert mit 17°C bis 35°C recht stark.

Das Aufheizen ab 600°C wurde typischerweise mit 150 K/h durchgeführt. Die Abkühlphase erfolgte mit Ofenkühlung (etwa 100 bis 150 K/h), wobei bei Temperaturen unterhalb von 600°C eine noch langsamere Abkühlrate zu erwarten ist.

Tabelle 5

| Charge | Nominelle Zusammensetzung | $\alpha+\gamma\to\gamma$ [1] in °C | $\alpha+\gamma\to\alpha$ [2] in °C | Breite $\alpha+\gamma$ in °C |
|---|---|---|---|---|
| 93/0328 | Fe-17Co-1,0V-1Cr | 893 | 928 | 35 |
| 93/0329 | Fe-17Cr-1,5V-0,5Cr | 925 | 945 | 20 |
| 93/0330 | Fe-17Co-2,0V | 950 | 973 | 23 |
| 93/0505 | Fe-17Co-1,4V-0,4Si | 953 | 970 | 17 |
| 1) 1. Onset Aufheizen in DSC, 2) 1. Onset Abkühlen in DSC | | | | |

Die Glühungen im $\alpha$-Gebiet (850°C, 910°C) führen bei beiden Chargen wie erwartet zu relativ geringen Induktionswerten B20 = B(20 A/cm) von unter 1,7 T, hohen Hc-Werten größer 0,6 A/cm und niedrigeren Maximal-permeabilitäten $\mu_{max}$ unterhalb von 5100, siehe die Tabellen 6 und 7. Tabelle 6 zeigt die Magnetwerte und Korngrößen $d_K$ für die Legierung 93/0328 mit Cr-Zusatz (Fe-17Co-1V-1Cr). Tabelle 7 zeigt die Magnetwerte und Korngrößen für die Legierung 93/0329 mit Cr-Zusatz (Fe-17Co-1,5V-0,5Cr).

Tabelle 6

| 93/0328 | Glühung | TMax in °C | B20 in T | B100 in T | Hc in A/cm | $\mu_{max}$ | Br in T | $d_k$ in $\mu m$ |
|---|---|---|---|---|---|---|---|---|
| $\alpha$ | 4h 850°C | 850 | 1,656 | 1,918 | 0,93 | 3.890 | 0,95 | 63-76 |
| | 10h 910°C | 910 | 1,623 | 1,887 | 0,63 | 4.902 | 1,02 | 107-125 |
| Y | 10h 910°C + 70h 930°C | 930 | 1,771 | 2,036 | 0,47 | 6.912 | 1,16 | >1500 |
| | 4h 1000°C | 1000 | 1,768 | 2,011 | 0,66 | 5.130 | 1,16 | 210-430 |
| | 4h 1050°C | 1050 | 1,767 | 2,012 | 0,63 | 5.387 | 1,18 | 180-350 |
| | 4h 1100°C | 1100 | 1,726 | 1,980 | 0,68 | 4.958 | 1,10 | 210-350 |
| | 4h 1150°C | 1150 | 1,692 | 1,956 | 0,68 | 4.863 | 1,09 | 180-350 |
| B20=B(20 A/cm), B100 = B(100 A/cm) | | | | | | | | |

Tabelle 7

| 93/0329 | Glühung | TMax in °C | B20 in T | B100 in T | Hc in A/cm | $\mu_{max}$ | Br in T | $d_k$ in $\mu m$ |
|---|---|---|---|---|---|---|---|---|
| $\alpha$ | 4h 850°C | 850 | 1,651 | 1,911 | 1,04 | 3.584 | 0,88 | 75 |
| | 10h 910°C | 910 | 1,620 | 1,881 | 0,62 | 5090 | 1,13 | 151 |
| $\gamma$ | h 1000°C (+10h 910°C) | 1000 | 1,803 (1,807) | 2,035 (2,038) | 0,51 (0,38) | 7.929 (16.658) | 1,38 (1,53) | 250 |
| | 4h 1050°C | 1050 | 1,809 | 2,039 | 0,50 | 7.943 | 1,39 | 302 |
| | 4h 1100°C | 1100 | 1,797 | 2,031 | 0,52 | 7.497 | 1,35 | 214 |
| | 4h 1150°C | 1150 | 1,778 | 2,018 | 0,47 | 7.860 | 1,35 | 254 |
| B20=B(20 A/cm), B100 = B(100 A/cm) | | | | | | | | |

Nach einer Glühung im $\gamma$-Gebiet (bis 1050°C) ergeben sich deutlich höhere B20-Werte von größer 1,75T. Eine weitere Erhöhung der Glühtemperatur (1100°C, 1150°C) führt bei dem Beispiel mit 1% Cr (Tabelle 6) zu einem deutlichen Absinken der Induktion B20 um bis zu 80 mT gegenüber der besten Glühung bei 930°C. Das Beispiel mit 0,5% Cr (Tabelle 7) hingegen ist in dieser Hinsicht deutlich stabiler, der Abfall gegenüber der besten Glühung bei 1050°C beträgt hier nur etwa 30 mT.

Figur 4 zeigt metallographische Schliffe zur Bestimmung der Korngröße an Charge 93/0328. links: 10h 910°C ($\alpha$), rechts: 10h 910°C+70h 930°C ($\gamma$).

Hinsichtlich der Korngröße $d_k$ ist bei beiden Chargen nur festzustellen, dass eine Glühung im $\gamma$-Gebiet zu größeren Körnern führt (> 180 $\mu$m) als eine Glühung im $\alpha$-Gebiet (<180 $\mu$m). Darüber hinaus kann kein weiterer Zusammenhang zwischen B20 und Korngröße ermittelt werden, da z.B. die Glühungen bei 1050°C und 1150°C der Charge 93/0328 zu gleichen Korngrößen von 180 $\mu$m bis 350 $\mu$m, aber sehr unterschiedlichen B20-Werten von 1,767 T und 1,692 T führen.

An der sehr lange bei 930°C geglühten Probe lässt sich aber durchaus ein Zusammenhang zwischen Koerzitivfeldstärke $H_c$ und Korngröße erkennen, da bei diesem Zustand sowohl das niedrigste $H_c$ der Charge (0, 47 A/cm), als auch die mit Abstand größten Körner auftraten (>1500 $\mu$m).

Bei der ternären Legierung 93/0330 mit Fe-17Co-2V (Tabelle 8) wurden zwei Glühungen im $\alpha$-Gebiet durchgeführt (850°C, 910°C) und vier Glühungen im $\gamma$-Gebiet (1000°C, 1050°C, 1100°C, 1150°C), vgl. Tabelle 8. Es bestätigt sich auch hier, dass der Hub in der Induktion B20 erst bei einer Glühung im $\gamma$-Gebiet auftritt. Weiterhin fällt bei sehr hoher Glühtemperatur von 1100°C oder mehr dieser Wert ebenfalls wieder ab.

Tabelle 8

| 93/0330 | Glühung | TMax in °C | B20 in T | B100 in T | Hc in A/cm | $\mu_{max}$ | Br in T | $d_k$ in $\mu$m |
|---|---|---|---|---|---|---|---|---|
| $\alpha$ | 4h 850°C | 850 | 1,648 | 1,906 | 1,05 | 3.533 | 0,87 | - |
| | 10h 910°C | 910 | 1,615 | 1,873 | 0,68 | 4.868 | 1,11 | - |
| $\gamma$ | h 1000°C | 1000 | 1,801 | 2,038 | 0,41 | 10.618 | 1,44 | 300-350 |
| | 4h 1050°C | 1050 | 1,812 | 2,040 | 0,35 | 12.670 | 1,50 | 250-350 |
| | 4h 1100°C | 1100 | 1,786 | 2,028 | 0,38 | 10.051 | 1,41 | 300-430 |
| | 4h 1150°C | 1150 | 1,756 | 2,005 | 0,36 | 10.568 | 1,44 | 300-430 |
| B20=B(20 A/cm), B100 = B(100 A/cm) | | | | | | | | |

Bei dieser Charge wird auch deutlich, dass die Remanenz Br sich durch die Glühung im $\gamma$-Gebiet deutlich erhöht, d.h. die Schleife wird deutlich rechteckiger (Br > 1,4 T).

Bei dem Beispiel 93/0505 mit Si-Zusatz (Fe-17Co-1,5V-0,5Cr) wurde nur die Glühung im $\gamma$-Gebiet betrachtet (1000°C, 1050°, 1100°C). Tabelle 9 zeigt die Magnetwerte und Korngrößen für die Legierung 93/0505.

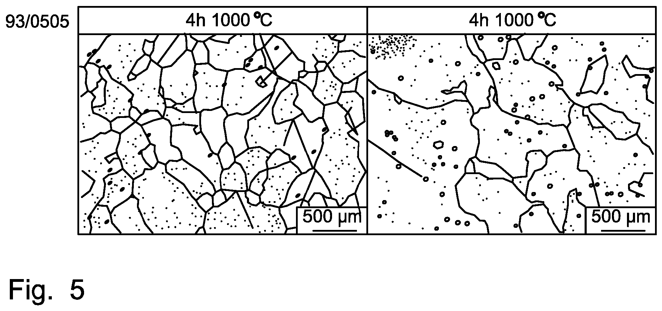

Wie auch bei den anderen Chargen wurde sehr hohe Induktionswerte B20 von bis zu 1,79 T gemessen, die bei 1100°C allerdings wieder deutlich abfallen. Die im Vergleich zu den anderen untersuchten Zusammensetzungen sehr niedrigen $H_c$-Werte von etwa 0,3 A/cm und die sehr hohe Permeabilität von größer 10.000 lassen sich evtl. über das relativ grobkörnige Gefüge erklären, vgl. Tabelle 9 und Figur 5.

Tabelle 9

| 93/0505 | Glühung | TMax in °C | B20 in T | B100 in T | Hc in A/cm | $\mu_{max}$ | Br in T | $d_k$ in $\mu$m |
|---|---|---|---|---|---|---|---|---|
| $\gamma$ | 4h 1000°C | 1000 | 1,787 | 2,029 | 0,32 | 12.668 | 1,32 | 350-710 |
| | 4h 1050°C | 1050 | 1,760 | 2,020 | 0,26 | 14.272 | 1,24 | 300-360 |
| | 4h 1100°C | 1100 | 1,692 | 1,969 | 0,33 | 10.819 | 1,20 | inhomogen, bis >1500 |
| B20=B(20 A/cm), B100 = B(100 A/cm) | | | | | | | | |

Bei allen untersuchten Chargen ergeben sich die hohen Induktionswerte (B20 > 1,75 T) nur bei einer Glühung im $\gamma$-Gebiet (FCC).

Es wurde beobachtet, dass die Induktionswerte nach einer Glühung knapp oberhalb des Phasenübergangs $\alpha$ +$\gamma$→$\gamma$ (FCC+BCC→FCC) am höchsten liegen. Dies korreliert mit einer deutlichen Vergröberung des Gefüges.

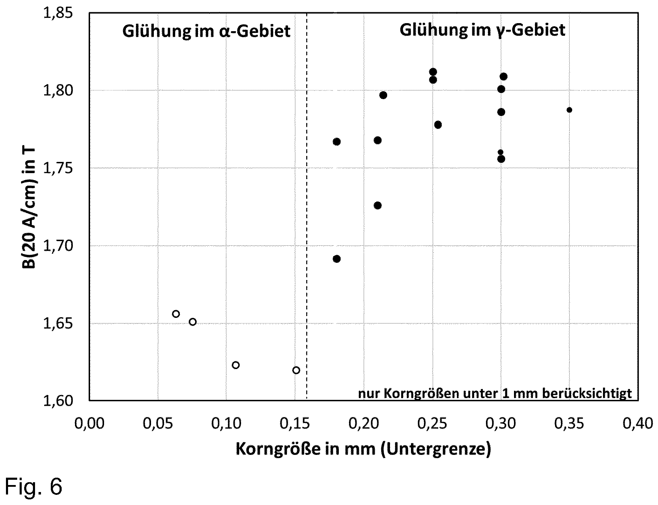

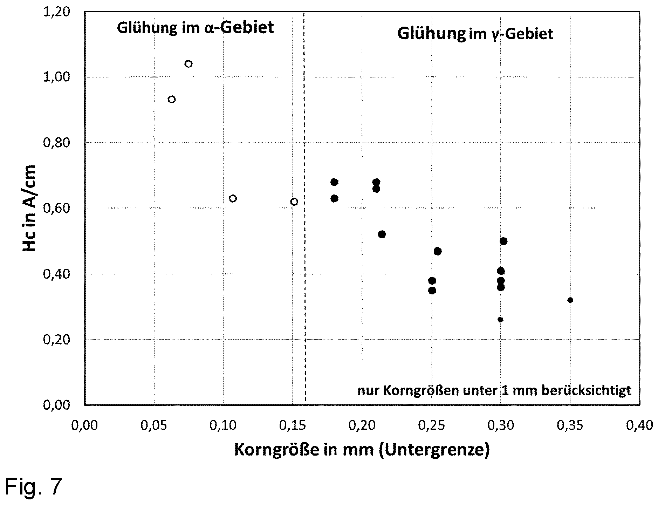

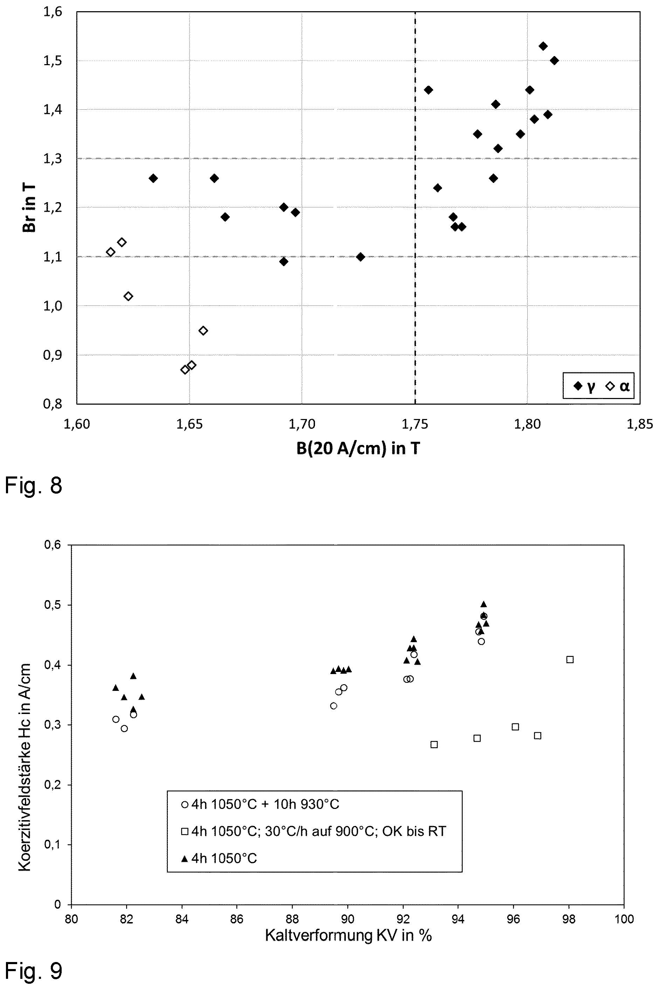

Tabelle 10 zeigt eine Zusammenfassung der gemessenen Korngrößen der untersuchten Chargen unter Berücksichtigung aller Glühungen mit Dauer zwischen 4 und 10h. Figur 6 zeigt eine Abbildung der Induktion $B_{20}$(B bei H=20 A/cm) in Abhängigkeit von der Korngröße. Figur 7 zeigt eine Abbildung der Koerzitivfeldstärke $H_c$ in Abhängigkeit von der Korngröße. Figur 8 zeigt einen Zusammenhang zwischen Remanenz $B_r$ und $B_{20}$(B bei H=20 A/cm) bei allen untersuchten Zuständen. Die ausgefüllten Symbole entsprechen Glühungen im $\gamma$-Gebiet (FCC), die nichtausgefüllten Symbole Glühungen im $\alpha$-Gebiet (BCC).

EP 3 730 286 B1

Tabelle 10

| Korngrößen nach Glühung (4 - 10h) in $\mu$m | Glühung im $\alpha$-Gebiet (BCC) | | Glühung im $\gamma$-Gebiet (FCC) | |
|---|---|---|---|---|
| Charge | von | bis | von | bis |
| 93/0328 | 63 | 125 | 210 | 350 |
| 93/0329 | 75 | 151 | 214 | 302 |
| 93/0330 | - | - | 300 | 430 |
| 93/0505 | - | - | 300 | >1500 |

Eine zu starke Erhöhung der Glühtemperatur (1100°C oder höher) hatte einen Abfall der betrachteten Induktionswerte zur Folge. Dabei verhalten sich die vier Chargen unterschiedlich, d.h. während die Chargen 93/0329 und 93/0330 auch bei 1150°C noch sehr hohe $B_{20}$-Werte größer 1,75 T aufweisen, ist bei den Chargen 93/0328 bzw. 93/0505 dieser Wert bereits bei 1150°C bzw. 1100°C auf 1,69 T abgesunken. Eine direkte Korrelation dieses Effekts zur Korngröße konnte dabei nicht ausgemacht werden.

Die Legierung 93/05050 mit Si Zusatz zeigt deutlich größere Körner als die Zusammensetzungen ohne Si. Entsprechend liegen auch die $H_c$-Werte am geringsten, wobei auch die ternäre Fe-Co-V Schmelze 93/0330 trotz deutlich kleinerer Korngröße annähernd so hohe $H_c$-Werte zeigt.

Wenn man die Zustände mit sehr grobem Korn von 1 mm oder größer ausklammert , ergeben sich direkte Zusammenhänge zwischen den magnetischen Kenngrößen und der Korngröße, vergleiche Figur 4 ($B_{20}$) und Figur 5($H_c$). Weiterhin erkennt man in Figur 6, dass eine hohe Induktion B20 mit einer hohen Remanenz $B_r$ im Zusammenhang steht. Ab einer Remanenz von 1,3 T weisen sogar alle Zustände aus dieser Untersuchung eine Induktion B20 von mindestens 1,75 T auf. Die Induktionserhöhung geht also einher mit einer Aufstellung der Hystereseschleife.

In weiteren Ausführungsbeispielen wird der Einfluss des Kaltverformungsgrades auf die magnetischen Eigenschaften untersucht. Aus weichmagnetischer Sicht sind niedrige Hc und hohe B-Werte vorteilhaft.

Beim Walzen kann die Bandbreitung vernachlässigt werden und der Kaltverformungsgrad KV der Enddicke $D_2$ wird definiert als die prozentuale Dickenabnahme bezogen auf einen nicht kaltverformte Ausgangsdicke $D_1$. Es gilt:

$$ KV[\%] = \frac{D_1 - D_2}{D_1} \cdot 100 $$

Die nicht kaltverformte Ausgangsdicke $D_1$ kann beispielsweise durch Warmwalzen oder durch eine Zwischenglühung (ZGL) realisiert werden. Es wurden sowohl $D_1$ im Bereich 1,9mm bis 6,4mm variiert, als auch $D_2$ im Bereich 0,35mm bis 0,10mm. Drei unterschiedliche Wärmebehandlungen wurden verwendet, die den Glühvarianten 1. Stufe + 2. Stufe bzw. 1. Stufe + kontrollierte Abkühlung. Die Abkühlrate der Glühung 4h 1050°C beträgt 150°C/h. OK bedeutet Ofenkühlung, was ebenfalls einer Abkühlrate von 150°C/h entspricht. RT bedeutet Raumtemperatur.

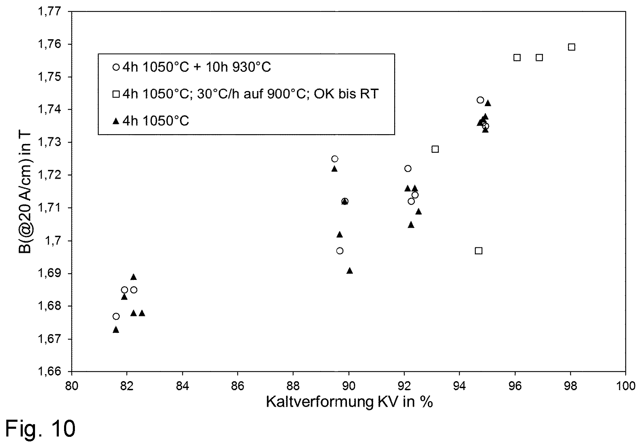

Figur 9 zeigt eine Abbildung der Koerzitivfeldstärke $H_c$ in Abhängigkeit von der Kaltverformung. Figur 10 zeigt eine Abbildung der Induktion $B_{20}$ (B bei H=20A/cm) in Abhängigkeit der Kaltverformung.

Man erkennt anhand Figur 9, dass die Induktion B bei einer Feldstärke H von 20A/cm mit dem Kaltverformungsgrad ansteigt. Der maximal realisierte KV ist 98%. Die B-Werte können mit steigender Kaltverformung verbessert werden und die Verschlechterung des Hc mit steigender Kaltverformung kann durch eine geeignete Abkühlung nach der 1. Stufe über dem Zweiphasengebiet kompensiert werden.

Zusammengefasst wird eine hochpermeable weichmagnetische Legierung bereitgestellt, die bessere weichmagnetische Eigenschaften, wie z.B. eine deutlich höhere Permeabilität und niedrigere Hystereseverluste aufweist, und gleichzeitig eine höhere Sättigung bietet als bestehende und kommerziell erhältliche FeCo-Legierungen Gleichzeitig bietet diese neue Legierung aber signifikant niedrigere Hystereseverluste als die bisher bekannten und kommerziell erhältlichen Legierungen mit Co-Gehalten zwischen 10 und 30 Gew.-%, und vor allem auch ein deutlich höheres, bisher für derartige Legierungen nie erreichtes Permeabilitätsniveau. Die Legierung kann auch großtechnisch und kostengünstig hergestellt werden, insbesondere in Form von planen Blechen und einem Blechpaket, das auf Grund der planen Bleche einen Füllfaktor größer als 90% oder 94% aufweisen kann.

**Patentansprüche**

**1.** Verfahren zum Herstellen eines weichmagnetischen Vorprodukts aufweisend:

Bereitstellen einer Legierung, die eine Zusammensetzung aus

| | | |
|---|---|---|
| 5 Gew.-% | $\leq$ Co | $\leq$ 25 Gew.-% |
| 0,3 Gew.-% | $\leq$ V | $\leq$ 5,0 Gew.-% |
| 0 Gew.-% | $\leq$ Cr | $\leq$ 3,0 Gew.-% |
| 0 Gew.-% | $\leq$ Si | $\leq$ 3,0 Gew.-% |
| 0 Gew.-% | $\leq$ Mn | $\leq$ 3,0 Gew.-% |
| 0 Gew.-% | $\leq$ Al | $\leq$ 3,0 Gew.-% |
| 0 Gew.-% | $\leq$ Ta | $\leq$ 0,5 Gew.-% |
| 0 Gew.-% | $\leq$ Ni | $\leq$ 0,5 Gew.-% |
| 0 Gew.-% | $\leq$ Mo | $\leq$ 0,5 Gew.-% |
| 0 Gew.-% | $\leq$ Cu | $\leq$ 0,2 Gew.-% |
| 0 Gew.-% | $\leq$ Nb | $\leq$ 0,25 Gew.-% |
| 0 Gew.-% | $\leq$ Ti | $\leq$ 0,05 Gew.-% |
| 0 Gew.-% | $\leq$ Ce | $\leq$ 0,05 Gew.-% |
| 0 Gew.-% | $\leq$ Ca | $\leq$ 0,05 Gew.-% |
| 0 Gew.-% | $\leq$ Mg | $\leq$ 0,05 Gew.-% |
| 0 Gew.-% | $\leq$ C | $\leq$ 0,02 Gew.-% |
| 0 Gew.-% | $\leq$ Zr | $\leq$ 0,1 Gew.-% |
| 0 Gew.-% | $\leq$ O | $\leq$ 0,025 Gew.-% |
| 0 Gew.-% | $\leq$ S | $\leq$ 0,015 Gew.-% |

Rest Eisen, wobei Cr+Si+Al+Mn $\leq$ 3,0 Gew.-%, und bis zu 0,2 Gew.-% an anderen schmelzbedingten Verunreinigungen besteht,

wobei das Vorprodukt einen Phasenübergang von einem BCC-Phasengebiet, in ein BCC/FCC Mischgebiet zu einem FCC Phasengebiet aufweist, wobei bei aufsteigender Temperatur der Phasenübergang zwischen dem BCC Phasengebiet und dem BCC/FCC Mischgebiet bei einer ersten Übergangstemperatur $T_{\ddot{U}1}$ und bei weiter ansteigender Temperatur der Übergang zwischen dem BCC/FCC Mischgebiet und dem FCC Phasengebiet bei einer zweiten Übergangstemperatur $T_{\ddot{U}2}$ stattfindet, wobei $T_{\ddot{U}2} > T_{\ddot{U}1}$ und die Differenz $T_{\ddot{U}2} - T_{\ddot{U}1}$ geringer als 45K ist, vorzugsweise geringer als 25K,

wobei das Vorprodukt folgender Wärmebehandlung unterzogen wird, wobei vor dem Start der Wärmebehandlung das Vorprodukt eine Kaltwalztextur oder eine Fasertextur aufweist,

Aufheizen des Vorprodukts zu einer Temperatur $T_1$ und danach

Wärmebehandeln des Vorprodukts bei der Temperatur $T_1$ für eine Zeitdauer $t_1$ und danach Abkühlung von $T_1$ bis Raumtemperatur,

oder

das Vorprodukt folgender Wärmebehandlung unterzogen wird:

Aufheizen des Vorprodukts zu einer Temperatur $T_1$ und danach
Wärmebehandeln des Vorprodukts bei der Temperatur $T_1$ für eine Zeitdauer $t_1$ und danach
Abkühlen des Vorprodukts auf einer Temperatur $T_2$, und danach
Wärmebehandeln des Vorprodukts bei der Temperatur $T_2$ für eine Zeitdauer $t_2$, und danach
Abkühlen des Vorprodukts von $T_2$ auf Raumtemperatur,

wobei $T_1 > T_2$ ist, $T_1$ oberhalb $T_{\ddot{U}2}$ und $T_2$ unterhalb $T_{\ddot{U}1}$ liegt, wobei 920°C $\leq T_1 < T_m$, 700°C $\leq T_2 \leq$ 1050°C, und $T_m$ die Solidustemperatur ist,

wobei 15 Minuten $\leq t_1 \leq$ 20 Stunden und 30 Minuten $\leq t_2 \leq$ 20 Stunden ist,

wobei die Aufheizrate über zumindest den Temperaturbereich von $T_{\ddot{U}1}$ auf $T_{\ddot{U}2}$ 1 K/h bis 100 K/h, vorzugsweise 10K/h bis 50 K/h beträgt, und

die Abkühlrate über zumindest den Temperaturbereich von $T_{\ddot{U}2}$ auf $T_{\ddot{U}1}$ 1K/h bis 100 K/h, vorzugsweise 10K/h bis 50 K/h beträgt, wobei das Vorprodukt die Gestalt mehrerer gestapelter Bleche oder eines oder mehrerer Blechpakete aufweist und mit einem zusätzlichen Gewicht beschwert wird, und das Vorprodukt mit dem Gewicht der Wärmebehandlung unterzogen wird, wobei das Gewicht der Beschwerung mindestens 20%, bevorzugt mindestens 50% des Gewichts des Vorprodukts beträgt.

2. Verfahren nach Anspruch 1, wobei die Aufheizrate über zumindest den Temperaturbereich von 900°C auf $T_1$ 1 K/h bis 100 K/h, vorzugsweise 10K/h bis 50 K/h beträgt, und/oder wobei die Abkühlrate über zumindest den Temperaturbereich von $T_1$ auf 900°C 1K/h bis 100 K/h, vorzugsweise 10K/h bis 50 K/h beträgt.

3. Verfahren nach Anspruch 1 oder Anspruch 2, wobei $T_1$ zwischen $T_{Ü2}$ und $(T_{Ü2} + 100°C)$ liegt.

4. Verfahren nach einem der Ansprüche 1 bis 3, wobei das Vorprodukt für eine Zeitdauer von über 15 Minuten oberhalb von $T_{Ü2}$ wärmebehandelt, und danach auf $T_2$ abgekühlt wird, oder das Vorprodukt für eine Zeitdauer von über 15 Minuten oberhalb von $T_{Ü2}$ wärmebehandelt, und danach auf Raumtemperatur abgekühlt wird.

5. Verfahren nach einem der Ansprüche 1 bis 4, wobei das Vorprodukt zumindest von $T_1$ auf Raumtemperatur abgekühlt wird und danach von Raumtemperatur auf $T_2$ aufgeheizt wird.

6. Verfahren nach einem der Ansprüche 1 bis 5, wobei das Vorprodukt unter einer wasserstoffhaltigen Atmosphäre wärmebehandelt wird, wobei nach dem Wärmebehandeln die weichmagnetische Legierung:

eine maximale Permeabilität $\mu_{max} \geq 5.000$, und/oder einen elektrischen Widerstand $\rho \geq 0,25\ \mu\Omega m$, Hystereseverluste $P_{Hys} \leq 0,07$ J/kg bei einer Amplitude von 1,5 T, und/oder eine Koerzitivfeldstärke $H_c$ von $\leq 0,7$ A/cm und/oder Induktion $B \geq 1,90$ T bei 100 A/cm aufweist, oder
eine maximale Permeabilität $\mu_{max} \geq 10.000$, und/oder einen elektrischen Widerstand $\rho \geq 0,25\ \mu\Omega m$, und/oder Hystereseverluste $P_{Hys} \leq 0,06$ J/kg bei einer Amplitude von 1,5 T, und/oder eine Koerzitivfeldstärke $H_c$ von $\leq 0,6$ A/cm und Induktion $B \geq 1,95$ T bei 100 A/cm aufweist, oder
eine maximale Permeabilität $\mu_{max} \geq 12.000$, vorzugsweise $\mu_{max} \geq 17.000$ und/oder einen elektrischen Widerstand $\rho \geq 0,30\ \mu\Omega m$, und/oder Hystereseverluste $P_{Hys} \leq 0,05$ J/kg bei einer Amplitude von 1,5 T, und/oder eine Koerzitivfeldstärke $H_c$ von $\leq 0,5$ A/cm, vorzugsweise eine Koerzitivfeldstärke $H_c$ von $\leq 0,4$ A/cm, vorzugsweise eine Koerzitivfeldstärke $H_c$ von $\leq 0,3$ A/cm und/oder Induktion $B \geq 2,00$ T bei 100 A/cm aufweist.

7. Verfahren nach einem der Ansprüche 1 bis 6, ferner aufweisend:

Bereitstellen einer Schmelze durch Vakuum- Induktionsschmelzen, Elektroschlacke- Umschmelzen oder Vakuum-Lichtbogen-Umschmelzen, die aus

| | | |
|---|---|---|
| 5 Gew.-% | $\leq$ Co | $\leq$ 25 Gew.-% |
| 0,3 Gew.-% | $\leq$ V | $\leq$ 5,0 Gew.-% |
| 0 Gew.-% | $\leq$ Cr | $\leq$ 3,0 Gew.-% |
| 0 Gew.-% | $\leq$ Si | $\leq$ 3,0 Gew.-% |
| 0 Gew.-% | $\leq$ Mn | $\leq$ 3,0 Gew.-% |
| 0 Gew.-% | $\leq$ Al | $\leq$ 3,0 Gew.-% |
| 0 Gew.-% | $\leq$ Ta | $\leq$ 0,5 Gew.-% |
| 0 Gew.-% | $\leq$ Ni | $\leq$ 0,5 Gew.-% |
| 0 Gew.-% | $\leq$ Mo | $\leq$ 0,5 Gew.-% |
| 0 Gew.-% | $\leq$ Cu | $\leq$ 0,2 Gew.-% |
| 0 Gew.-% | $\leq$ Nb | $\leq$ 0,25 Gew.-% |
| 0 Gew.-% | $\leq$ Ti | $\leq$ 0,05 Gew.-% |
| 0 Gew.-% | $\leq$ Ce | $\leq$ 0,05 Gew.-% |
| 0 Gew.-% | $\leq$ Ca | $\leq$ 0,05 Gew.-% |
| 0 Gew.-% | $\leq$ Mg | $\leq$ 0,05 Gew.-% |
| 0 Gew.-% | $\leq$ C | $\leq$ 0,02 Gew.-% |
| 0 Gew.-% | $\leq$ Zr | $\leq$ 0,1 Gew.-% |
| 0 Gew.-% | $\leq$ O | $\leq$ 0,025 Gew.-% |
| 0 Gew.-% | $\leq$ S | $\leq$ 0,025Gew.-% |

Rest Eisen, wobei Cr+Si+Al+Mn $\leq$ 3,0 Gew.-%, und bis zu 0,2 Gew.-% an anderen Verunreinigungen besteht,

Erstarren der Schmelze zu einem Gussblock,
Umformen des Gussblocks, um das Vorprodukt herzustellen,

wobei die Umformung mittels Heizwalzen und/oder Schmieden und/oder Kaltumformung durchgeführt wird, wobei der Gussblock mittels Warmwalzen bei Temperaturen zwischen 900°C und 1300°C zu einer Bramme und anschließend zu einem Warmband mit einer Dicke $D_1$ umgeformt wird und danach mittels Kaltwalzen zu einem Band mit einer Dicke $D_2$ umgeformt wird, wobei 0,05 mm $\leq D_2 \leq$ 1,0 mm ist, und $D_2 < D_1$ ist.

8. Verfahren nach Anspruch 7, wobei

zunächst ein Warmband der Dicke $D_1$ durch Stranggießen hergestellt wird, welches danach mittels Kaltwalzen zu einem Band mit einer Dicke $D_2$ umgeformt wird, wobei 0,05 mm $\leq D_2 \leq$ 1,0 mm ist, und $D_2 < D_1$ ist, wobei der Kaltverformungsgrad durch Kaltwalzen >40%, vorzugsweise >80%, vorzugsweise >95% ist, oder der Gussblock mittels Warmwalzen zu einem Knüppel bei Temperaturen zwischen 900°C und 1300°C umgeformt wird und danach mittels Kaltziehen zu einem Draht umgeformt wird, wobei der Kaltverformungsgrad durch Kaltziehen >40%, vorzugsweise >80%, vorzugsweise >95% ist.

**Claims**

1. A method of producing a soft magnetic preliminary product, comprising:

providing an alloy having a composition of

5% by weight ≤ Co ≤ 25% by weight

0.3% by weight ≤ V ≤ 5.0% by weight

0% by weight ≤ Cr ≤ 3.0% by weight

0% by weight ≤ Si ≤ 3.0% by weight

0% by weight ≤ Mn ≤ 3.0% by weight

0% by weight ≤ Al ≤ 3.0% by weight

0% by weight ≤ Ta ≤ 0.5% by weight

0% by weight ≤ Ni ≤ 0.5% by weight

0% by weight ≤ Mo ≤ 0.5% by weight

0% by weight ≤ Cu ≤ 0.2% by weight

0% by weight ≤ Nb ≤ 0.25% by weight

0% by weight ≤ Ti ≤ 0.05% by weight

$$0\% \text{ by weight} \leq Ce \leq 0.05\% \text{ by weight}$$

$$0\% \text{ by weight} \leq Ca \leq 0.05\% \text{ by weight}$$

$$0\% \text{ by weight} \leq Mg \leq 0.05\% \text{ by weight}$$

$$0\% \text{ by weight} \leq C \leq 0.02\% \text{ by weight}$$

$$0\% \text{ by weight} \leq Zr \leq 0.1\% \text{ by weight}$$

$$0\% \text{ by weight} \leq O \leq 0.025\% \text{ by weight}$$

$$0\% \text{ by weight} \leq S \leq 0.015\% \text{ by weight}$$

the remainder iron, wherein $Cr+Si+Al+Mn \leq 3.0\%$ by weight and up to 0.2% by weight consisting of other impurities due to melting,

wherein the preliminary product has a phase transition from a BCC-phase region, to a BCC/FCC mixed region to an FCC phase region, wherein, with increasing temperature, the phase transition between the BCC phase region and the BCC/FCC mixed region occurs at a first transition temperature $Tt_1$, and, with further increasing temperature, the transition between the BCC/FCC mixed region and the FCC phase region occurs at a second transition temperature $Tt_2$, wherein $T_{t2} > T_{t1}$ and the difference $T_{t2} - T_{t1}$ is less than 45K, preferably less than 25K, wherein the preliminary product is subjected to the following heat treatment, wherein, prior to the onset of the heat treatment, the preliminary product has a cold-rolled texture or a fibrous texture:

heating the preliminary product to a temperature $T_1$, and subsequently
heat treating the preliminary product at the temperature $T_1$ for a duration $t_1$, and subsequently cooling from $T_1$ to room temperature,
or
the preliminary product is subjected to the following heat treatment:

heating the preliminary product to a temperature $T_1$, and subsequently
heat treating the preliminary product at the temperature $T_1$ for a duration $t_1$, and subsequently
cooling the preliminary product to a temperature $T_2$, and subsequently
heat treating the preliminary product at the temperature $T_2$ for a duration $t_2$, and subsequently
cooling the preliminary product from $T_2$ to room temperature,
wherein $T_1 > T_2$, $T_1$ is above $T_{t2}$ and $T_2$ below $T_{t1}$, wherein $920°C \leq T_1 < T_m$, $700°C \leq T_2 \leq 1050°C$, and $T_m$ is the solidus temperature,
wherein 15 minutes $\leq t1 \leq 20$ hours, and 30 minutes $\leq t2 \leq 20$ hours,
wherein the heating rate across at least the temperature range from $T_{t1}$ to $T_{t2}$ is 1 K/h to 100 K/h, preferably 10 K/h to 50 K/h, and
the cooling rate across at least the temperature range from $T_{t2}$ to $T_{t1}$ is 1 K/h to 100 K/h, preferably 10 K/h to 50 K/h, wherein the preliminary product has the form of multiple stacked metal sheets or one or more metal sheet packages and is loaded with an additional weight, and the preliminary product with the weight is subjected to the heat treatment, wherein the weight of the loading is at least 20%, preferably at least 50% of the weight of the preliminary product.

2. The method of claim 1, wherein the heating rate across at least the temperature range from 900°C to $T_1$ is 1 K/h to 100 K/h, preferably 10 K/h to 50 K/h, and/or wherein the cooling rate across at least the temperature range from $T_1$ to 900°C is 1 K/h to 100 K/h, preferably 10 K/h to 50 K/h.

3. The method according to claim 1 or claim 2, wherein $T_1$ is between $T_{t2}$ and ($T_{t2}$ + 100°C).

4. The method according to one of claims 1 to 3, wherein the preliminary product is heat treated for a duration of over 15

minutes above $Tt_2$, and subsequently cooled to $T_2$, or the preliminary product is heat treated for a duration of over 15 minutes above $Tt_2$, and subsequently cooled to room temperature.

5. The method according to one of claims 1 to 4, wherein the preliminary product is cooled at least from $T_1$ to room temperature, and subsequently heated from room temperature to $T_2$.

6. The method according to one of claims 1 to 5, wherein the preliminary product is heat treated under a hydrogenous atmosphere, wherein, after heat treating, the soft magnetic alloy:

has a maximum permeability $\mu_{max} \geq 5,000$, and/or an electric resistance $\rho \geq 0.25\ \mu\Omega m$, hysteresis losses $P_{hys} \leq 0.07$ J/kg at an amplitude of 1.5 T, and/or a coercitivity $H_c$ of $\leq 0,7$ A/cm and/or induction $B \geq 1.90$ T at 100 A/cm, or has a maximum permeability $\mu_{max} \geq 10,000$, and/or an electric resistance $\rho \geq 0.25\ \mu\Omega m$, and/or hysteresis losses $P_{hys} \leq 0.06$ J/kg at an amplitude of 1.5 T, and/or a coercitivity $H_c$ of $\leq 0,06$ A/cm and induction $B \geq 1,95$ T at 100 A/cm, or has a maximum permeability $\mu_{max} \geq 12,000$, preferably $\mu_{max} \geq 17,000$ and/or an electric resistance $\rho \geq 0.30\ \mu\Omega m$, and/or hysteresis losses $P_{hys} \leq 0.05$ J/kg at an amplitude of 1.5 T, and/or a coercitivity $H_c$ of $\leq 0.5$ A/cm, preferably a coercitivity $H_c$ of $\leq 0.4$ A/cm, preferably a coercitivity $H_c$ of $\leq 0.3$ A/cm, and/or induction $B \geq 2.00$ T at 100 A/cm.

7. The method according to one of claims 1 to 6, further comprising:

providing a melt by vacuum induction melting, electroslag remelting or vacuum arc remelting, consisting of

$$5\% \text{ by weight} \leq Co \leq 25\% \text{ by weight}$$

$$0.3\% \text{ by weight} \leq V \leq 5.0\% \text{ by weight}$$

$$0\% \text{ by weight} \leq Cr \leq 3.0\% \text{ by weight}$$

$$0\% \text{ by weight} \leq Si \leq 3.0\% \text{ by weight}$$

$$0\% \text{ by weight} \leq Mn \leq 3.0\% \text{ by weight}$$

$$0\% \text{ by weight} \leq Al \leq 3.0\% \text{ by weight}$$

$$0\% \text{ by weight} \leq Ta \leq 0.5\% \text{ by weight}$$

$$0\% \text{ by weight} \leq Ni \leq 0.5\% \text{ by weight}$$

$$0\% \text{ by weight} \leq Mo \leq 0.5\% \text{ by weight}$$

$$0\% \text{ by weight} \leq Cu \leq 0.2\% \text{ by weight}$$

$$0\% \text{ by weight} \leq Nb \leq 0.25\% \text{ by weight}$$

$$0\% \text{ by weight} \leq Ti \leq 0.05\% \text{ by weight}$$

$$0\% \text{ by weight} \leq Ce \leq 0.05\% \text{ by weight}$$

$$0\% \text{ by weight} \le Ca \le 0.05\% \text{ by weight}$$

$$0\% \text{ by weight} \le Mg \le 0.05\% \text{ by weight}$$

$$0\% \text{ by weight} \le C \le 0.02\% \text{ by weight}$$

$$0\% \text{ by weight} \le Zr \le 0.1\% \text{ by weight}$$

$$0\% \text{ by weight} \le O \le 0.025\% \text{ by weight}$$

$$0\% \text{ by weight} \le S \le 0.015\% \text{ by weight}$$

the remainder iron, wherein Cr+Si+Al+Mn $\le$ 3.0% by weight and up to 0.2% by weight other impurities due to melting,
solidifying the melt to a cast block,
forming the cast block to produce the preliminary product, wherein the forming is performed by hot rolling and/or forging and/or cold forming, wherein the cast block is formed by hot rolling to a slab at temperatures between 900°C and 1300°C and subsequently to a hot strip with a thickness $D_1$, and subsequently formed by cold rolling to a strip with a thickness $D_2$, wherein 0.05 mm $\le D_2 \le$ 1.0 mm, and $D_2 < D_1$.

8.  The method according to claim 7, wherein

initially, a hot strip of thickness $D_1$ is produced by continuous casting, which is then formed by cold rolling to a strip with a thickness $D_2$, wherein 0.05 mm $\le D_2 \le$ 1.0 mm, and $D_2 < D_1$, wherein the degree of cold deformation by cold rolling is > 40%, preferably > 80%, preferably > 95%, or
the cast block is formed by hot rolling to a billet at temperatures between 900°C and 1300°C, and subsequently formed to a wire by cold drawing, wherein the degree of cold deformation by cold drawing is > 40%, preferably > 80%, preferably > 95%.

**Revendications**

1.  Procédé de fabrication d'un demi-produit magnétique doux consistant à :

préparer un alliage, dont la composition est constituée de

$$5 \text{ \% en poids} \le Co \le 2\,5 \text{ \% en poids}$$

$$0{,}3 \text{ \% en poids} \le V \le 5{,}05 \text{ \% en poids}$$

$$0 \text{ \% en poids} \le Cr \le 3{,}0 \text{ \% en poids}$$

$$0 \text{ \% en poids} \le Si \le 3{,}0 \text{ \% en poids}$$

$$0 \text{ \% en poids} \le Mn \le 3{,}0 \text{ \% en poids}$$

$$0 \text{ \% en poids} \le Al \le 3{,}0 \text{ \% en poids}$$

$$0 \text{ \% en poids} \le Ta \le 0{,}5 \text{ \% en poids}$$

$$0 \text{ % en poids} \leq \text{Ni} \leq 0,5 \text{ % en poids}$$

$$0 \text{ % en poids} \leq \text{Mo} \leq 0,5 \text{ % en poids}$$

$$0 \text{ % en poids} \leq \text{Cu} \leq 0,2 \text{ % en poids}$$

$$0 \text{ % en poids} \leq \text{Nb} \leq 0,25 \text{ % en poids}$$

$$0 \text{ % en poids} \leq \text{Ti} \leq 0,05 \text{ % en poids}$$

$$0 \text{ % en poids} \leq \text{Ce} \leq 0,05 \text{ % en poids}$$

$$0 \text{ % en poids} \leq \text{Ca} \leq 0,05 \text{ % en poids}$$

$$0 \text{ % en poids} \leq \text{Mg} \leq 0,05 \text{ % en poids}$$

$$0 \text{ % en poids} \leq \text{C} \leq 0,02 \text{ % en poids}$$

$$0 \text{ % en poids} \leq \text{Zr} \leq 0,1 \text{ % en poids}$$

$$0 \text{ % en poids} \leq \text{O} \leq 0,025 \text{ % en poids}$$

$$0 \text{ % en poids} \leq \text{S} \leq 0,015 \text{ % en poids}$$

le reste étant du fer, Cr+Si+Al+Mn $\leq$ 3,0 % en poids, et jusqu'à 0,2 % en poids d'autres impuretés liées à la fusion, dans lequel le demi-produit présente une transition de phase depuis un domaine de phase BCC dans un domaine mixte BCC/FCC, à un domaine de phase FCC, dans lequel, lorsque la température augmente, la transition de phase entre le domaine de phase BCC et le domaine mixte BCC/FCC se produit à une première température de transition $T_{\ddot{U}1}$ et, lorsque la température continue d'augmenter, la transition entre le domaine mixte BCC/FCC et le domaine de phase FCC se produit à une deuxième température de transition $T_{\ddot{U}2}$, dans lequel $T_{\ddot{U}2} > T_{\ddot{U}1}$ et la différence $T_{\ddot{U}2} - T_{\ddot{U}1}$ est inférieure à 45 K, de préférence inférieure à 25 K, dans lequel on traite ensuite thermiquement le demi-produit, le demi-produit présentant une texture de laminage à froid ou une texture fibreuse avant le début du traitement thermique,

chauffer le demi-produit à une température $T_i$ puis traiter thermiquement le demi-produit à la température $T_1$ pendant une durée $t_1$, puis le refroidir de la température $T_1$ à la température ambiante,

ou

le demi-produit est soumis au traitement thermique suivant :

chauffage du demi-produit à une température $T_1$, puis
traitement thermique du demi-produit à la température $T_1$ pendant une durée $t_1$, puis refroidissement du demi-produit à une température $T_2$, puis
traitement thermique du demi-produit à la température $T_2$ pendant une durée $t_2$, puis
refroidissement du demi-produit de la température $T_2$ à la température ambiante,

dans lequel $T_1 > T_2$, $T_1$ est supérieure à $T_{\ddot{U}2}$ et $T_2$ est inférieure à $T_{\ddot{U}1}$, 920 °C $\leq T_1 < T_m$, 700°C $\leq T_2 \leq$ 1 050°C, et $T_m$ est la température du solidus,
dans lequel 15 minutes $\leq t_1 \leq$ 20 heures et 30 minutes $\leq t_2 \leq$ 20 heures,
dans lequel la vitesse de chauffage dans au moins la plage de température allant de $T_{\ddot{U}1}$ à $T_{\ddot{U}2}$ s'élève de 1 K/h à 100 K/h, de préférence 10 K/h à 50 K/h, et
la vitesse de refroidissement dans au moins la plage de température allant de $T_{\ddot{U}1}$ à $T_{\ddot{U}2}$ s'élève de 1K/h à 100 K/h, de préférence 10 K/h à 50 K/h, dans lequel le demi-produit présente la forme d'une pluralité de tôles empilées ou d'un ou plusieurs paquets de tôles et est alourdi d'un poids supplémentaire, et le demi-produit est soumis au poids du traitement thermique, et dans lequel le poids de l'alourdissement s'élève au moins à 20 %, de préférence à 50 % du poids du demi-produit.

2. Procédé selon la revendication 1, dans lequel la vitesse de chauffage dans au moins la plage de température allant de 900 °C à $T_1$ est de 1 K/h à 100 K/h, de préférence 10 K/h à 50 K/h, et/ou la vitesse de refroidissement dans au moins la plage de refroidissement $T_1$ à 900°C est de 1 K/h jusqu'à 100 K/h, de préférence de 10 K/h jusqu'à 50 K/h.

3. Procédé selon la revendication 1 ou la revendication 2, dans lequel $T_1$ se situe entre $T_{Ü2}$ et ($T_{Ü2}$ + 100°C).

4. Procédé selon l'une quelconque des revendications 1 à 3, dans lequel le demi-produit est soumis à un traitement thermique pendant une durée de plus de 15 minutes à une température supérieure à $T_{Ü2}$, et ensuite est refroidi à $T_2$, ou le demi-produit est soumis au traitement thermique pendant une durée de plus de 15 minutes à une température supérieure à $T_{Ü2}$, et ensuite est refroidi à la température ambiante.

5. Procédé selon l'une quelconque des revendications 1 à 4, dans lequel le demi-produit est chauffé au moins de $T_1$ à la température ambiante et ensuite de la température ambiante à $T_2$.

6. Procédé selon l'une quelconque des revendications 1 à 5, dans lequel le demi-produit est soumis au traitement thermique dans une atmosphère contenant de l'hydrogène, dans lequel après le traitement thermique, l'alliage magnétique doux présente :

une perméabilité maximale $\mu_{max} \geq 5\ 000$, et/ou une résistance électrique $\rho \geq 0{,}25\ \mu\Omega m$, et/ou des pertes par hystérésis $P_{Hys} \leq 0{,}07$ J/kg à une amplitude de 1,5 T, et/ou un champ coercitif $H_c$ de $\leq 0{,}7$ A/cm et/ou une induction $B \geq 1{,}90$ T à 100 A/cm, ou
une perméabilité maximale $\mu_{max} \geq 10\ 000$, et/ou une résistance électrique $\rho \geq 0{,}25\ \mu\Omega m$, et/ou des pertes par hystérésis $P_{Hys} \leq 0{,}06$ J/kg à une amplitude de 1,5 T, et/ou un champ coercitif $H_c$ de $\leq 0{,}6$ A/cm et/ou une induction $B \geq 1{,}95$ T à 100 A/cm, ou
une perméabilité maximale $\mu_{max} \geq 12\ 000$, de préférence $\mu_{max} \geq 17\ 000$ et/ou une résistance électrique $\rho \geq 0{,}30$ $\mu\Omega m$, et/ou des pertes par hystérésis $P_{Hys} \leq 0{,}05$ J/kg à une amplitude de 1,5 T, et/ou un champ coercitif $H_c$ de $\leq$ 0,5 A/cm, de préférence un champ coercitif $H_c$ de $\leq 0{,}4$ A/cm, de préférence un champ coercitif $H_c$ de $\leq 0{,}3$ A/cm et/ou une induction $B \geq 2{,}00$ T à 100 A/cm.

7. Procédé selon l'une quelconque des revendications 1 à 6, consistant en outre à :

préparer un bain par fusion sous vide par induction, refusion sous laitier électroconducteur ou refusion sous vide à l'arc électrique, ledit bain est constitué de

$$5 \text{ \% en poids} \leq Co \leq 25 \text{ \% en poids}$$

$$0{,}3 \text{ \% en poids} \leq V \leq 5{,}0 \text{ \% en poids}$$

$$0 \text{ \% en poids} \leq Cr \leq 3{,}0 \text{ \% en poids}$$

$$0 \text{ \% en poids} \leq Si \leq 3{,}0 \text{ \% en poids}$$

$$0 \text{ \% en poids} \leq Mn \leq 3{,}0 \text{ \% en poids}$$

$$0 \text{ \% en poids} \leq Al \leq 3{,}0 \text{ \% en poids}$$

$$0 \text{ \% en poids} \leq Ta \leq 0{,}5 \text{ \% en poids}$$

$$0 \text{ \% en poids} \leq Ni \leq 0{,}5 \text{ \% en poids}$$

$$0 \text{ \% en poids} \leq \text{Mo} \leq 0{,}5 \text{ \% en poids}$$

$$0 \text{ \% en poids} \leq \text{Cu} \leq 0{,}2 \text{ \% en poids}$$

$$0 \text{ \% en poids} \leq \text{Nb} \leq 0{,}25 \text{ \% en poids}$$

$$0 \text{ \% en poids} \leq \text{Ti} \leq 0{,}05 \text{ \% en poids}$$

$$0 \text{ \% en poids} \leq \text{Ce} \leq 0{,}05 \text{ \% en poids}$$

$$0 \text{ \% en poids} \leq \text{Ca} \leq 0{,}05 \text{ \% en poids}$$

$$0 \text{ \% en poids} \leq \text{Mg} \leq 0{,}05 \text{ \% en poids}$$

$$0 \text{ \% en poids} \leq \text{C} \leq 0{,}02 \text{ \% en poids}$$

$$0 \text{ \% en poids} \leq \text{Zr} \leq 0{,}1 \text{ \% en poids}$$

$$0 \text{ \% en poids} \leq \text{O} \leq 0{,}025 \text{ \% en poids}$$

$$0 \text{ \% en poids} \leq \text{S} \leq 0{,}025 \text{ \% en poids}$$

le reste étant du fer, Cr+Si+Al+Mn $\leq$ 3,0 % en poids, et jusqu'à 0,2 % en poids d'autres impuretés,
solidifier le bain en un lingot de fonderie
former le lingot de fonderie pour fabriquer le demi-produit, dans lequel le formage s'effectue par laminage à chaud et/ou par forgeage et/ou par formage à froid, dans lequel le lingot de fonderie est formé par laminage à chaud à des températures comprises entre 900 °C et 1 300 °C en une brame et ensuite en un feuillard à chaud ayant une épaisse $D_1$ et ensuite par laminage à froid en un feuillard ayant une épaisseur $D_2$, dans lequel 0,05 mm $\leq D_2 \leq$ 1,0 mm, et $D_2 < D_1$.

8. Procédé selon la revendication 7, dans lequel

en premier lieu un feuillard à chaud d'épaisseur $D_2$ est fabriqué par coulée continue, lequel est ensuite formé par laminage à froid en un feuillard ayant une épaisseur $D_2$, dans lequel 0,05 mm $\leq D_2 \leq$ 1,0 mm, et $D_2 <$ Di, dans lequel le degré d'écrouissage par laminage à froid est > 40 %, de préférence > 80 %, de préférence > 95 %, ou le lingot de fonderie est formé par laminage à chaud en une billette à des températures comprises entre 900 °C et 1 300 °C et ensuite est transformé en fil, dans lequel le degré d'écrouissage par étirage à froid est de > 40 %, de préférence > 80 %, de préférence > 95 %.

Fig. 1

Fig. 2

Fig. 3

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013125790 A1